# EUROPÄISCHE PATENTSCHRIFT

(11) **EP 0 616 596 B1**
(45) Veröffentlichungstag und Bekanntmachung des Hinweises auf die Patenterteilung: **27.11.1996**
(21) Anmeldenummer: 93919304.1
(22) Anmeldetag: 09.09.1993
(51) Int. Cl.: B65G 49/06, B65G 47/53

(54) **UMLENKVORRICHTUNG FÜR EINEN STROM VON BEHÄLTERN AUS GLAS O.DGL.**
DIVERTING DEVICE FOR A MOVING LINE OF GLASS CONTAINERS OR THE LIKE
DISPOSITIF DE DEVIATION POUR UN FLUX DE RECIPIENTS EN VERRE OU SIMILAIRE

(30) Priorität: 20.10.1992 DE 4235369
(43) Veröffentlichungstag der Anmeldung: 28.09.1994
(73) Patentinhaber: FIRMA HERMANN HEYE, D-31682 Obernkirchen (DE)
(72) Erfinder: HERMENING, Heinz, D-32457 Porta Westfalica (DE); SCHWARZER, Siegfried, D-31638 Stöckse (DE); SEIDEL, Hans-Georg, D-31737 Rinteln (DE)
(74) Vertreter: Kosel, Peter, Dipl.-Ing.
(86) Internationale Anmeldenummer: EP9302434
(87) Internationale Veröffentlichungsnummer: WO9408879

(56) Entgegenhaltungen:
- DE-A- 2 002 150
- DE-A- 2 508 275
- DE-A- 2 548 988
- DE-A- 2 752 193
- DE-A- 3 340 088
- DE-A- 3 426 713
- DE-A- 3 811 394
- US-A- 4 411 353

## Beschreibung

Die Erfindung betrifft eine Vorrichtung nach dem Oberbegriff des Anspruchs 1.

Bei einer bekannten Vorrichtung dieser Art (Übergabevorrichtung Typ WT 650 der Fa. Ernst Pennekamp, Hölker Feld 22, W-5600 Wuppertal 2, Bundesrepublik Deutschland) ist das Antriebsorgan als endlose Kette ausgebildet, deren Arbeitstrum längs der stetig gekrümmten Bahn geführt und durch ein Antriebskettenrad geschoben ist. Jeder Transportfinger ist fest mit einem Anlaufstück der Stützeinrichtung zu einem L-förmigen Bauteil verbunden. Jedes Bauteil ist an der Kette um eine senkrechte Achse schwenkbar durch einen rückwärtigen Arm, der an seinem freien Ende eine in einer stationären Kurvenbahn ablaufende Kurvenrolle aufweist. Die Transportfinger sollen durch besondere Formgestaltung der Kurvenbahn am Einlauf des ersten Transportbandes in den Behälterstrom eingeschwenkt und gleich nach der Abgabe der Behälter an das zweite Transportband außer Berührung mit den Behältern weggeschwenkt werden. Am Abgabeende ist die Kette über ein Umlenkkettenrad geführt, dessen Achse zum Kettenspannen in Richtung des zweiten Transportbandes einstellbar ist. Zwischen dem ersten und dem zweiten Transportband ist eine stationäre Gleitplatte für die Behälter angebracht. Die Kette wird zumindest annähernd mit der geringeren zweiten Geschwindigkeit des zweiten Transportbandes angetrieben. Nachteilig ist, daß jeder Behälter zumindest auf der Gleitplatte sich nicht in definierter, reproduzierbarer Anlage an seinem Transportfinger und dem zugehörigen Anlaufstück befindet. So ist nicht gewährleistet, daß die Behälter in gleichen Abständen und in einer gleichbleibenden Reihe auf das zweite Transportband gelangen. Außerdem bedingt die periodische Schwenkung der Transportfinger Aufwand und Verschleiß.

Üblicherweise gibt eine Glasformmaschine die darin hergestellten Behälter auf das erste Transportband ab. Auf dem ersten Transportband stehen die Behälter aus technischen Gründen in verhältnismäßig großem Abstand voneinander. Das erste Transportband läuft mit verhältnismäßig hoher Geschwindigkeit. Unter diesen, auf dem ersten Transportband herrschenden Verhältnissen kann eine problemlose Einbringung der Behälter in den nachgeschalteten Kühlofen nicht geschehen. Es ist deshalb üblich, den Behälterstrom von dem ersten Transportband auf ein unter einem Winkel von meist 90^{o} dazu verlaufendes zweites Transportband umzulenken. Das zweite Transportband läuft mit geringerer Geschwindigkeit, so daß die Behälter auf dem zweiten Transportband einen geringeren Abstand voneinander einnehmen. Die Behälter werden von dem zweiten Transportband durch einen an sich bekannten Einschieber jeweils zu einer größeren Anzahl gleichzeitig in den Kühlofen eingeschoben. Damit dieses Einschieben geordnet und dennoch schnell ohne das Risiko des Umwerfens von Behältern vonstatten gehen kann, ist es wünschenswert, die Abstände der Behälter voneinander auf dem zweiten Transportband möglichst gering und untereinander gleich zu gestalten und außerdem dafür zu sorgen, daß die Behälter auf dem zweiten Transportband möglichst in einer geraden Linie stehen. Die Umlenkung der Behälter von dem ersten auf das zweite Transportband besorgen bisher Umlenkvorrichtungen, die Behälter stoßartig belasten. Die Transportfinger der bekannten Umlenkvorrichtungen laufen im wesentlichen mit der geringeren Geschwindigkeit des zweiten Transportbandes um. Das hat zur Folge, daß jeder Behälter auf dem ersten Transportband zunächst auf die Rückseite eines Transportfingers aufläuft und im weiteren Verlauf der Umlenkung einen zweiten Schlag durch die Vorderseite des nachfolgenden Transportfingers erfährt, der dann den Weitertransport des Behälters übernimmt. Außerdem ist, wie erwähnt, die Umlenkung mit einer Richtungsänderung der Behälter um meist 90^{o} verbunden. Dies führt in Abhängigkeit von Art und Formgestaltung des Behälters zu mehr oder minder großen Quer- und Kippkräften, die einen unruhigen Stand der Behälter zur Folge haben. So sind während des Umlenkens und auch noch kurz danach auf dem zweiten Transportband Taumel-, Dreh- und Schaukelbewegungen der Behälter zu beobachten, die insgesamt für ein geordnetes Umlenken und die wünschenswerte Positionierung der Behälter auf dem zweiten Transportband abträglich sind.

Vorrichtungen der eingangs genannten Art sind auch aus der DE-Offenlegungsschrift 2 002 150 und der US 4 411 353 A bekannt. In beiden Fällen ist das Antriebsorgan als Rollenkette 56; 16 ausgebildet. In der DE-Offenlegungsschrift 2 002 150 wird die Rollenkette 56 durch eine mit Zugfedern 70, 70 vorgespannte Druckplatte 66 gespannt, an der die Rollenkette 56 entlanggleitet. In beiden Fällen ist zwischen dem ersten und zweiten Transportband wiederum eine stationäre Gleitplatte 32 angeordnet. Die Nachteile sind die gleichen wie bei der eingangs behandelten bekannten Vorrichtung.

Aus der DE 25 48 988 C3 und der DE 27 52 193 A1 ist es jeweils an sich bekannt, zwischen einem Anlieferband 13; 12 und einem Abführband 15; 13 ein Wägeband 28; 19 anzuordnen. Das Wägeband läuft allerdings zumindest annähernd parallel zu dem aktiven Trum einer bandförmigen Umlenkvorrichtung 15 bis 17.

Aus der DE G 91 14 766.2 U1 ist es an sich bekannt, Druckschriftenstapel 1 unter Beibehaltung ihrer Orientierung von einer Förderstrecke 2 auf eine unter 90^{o} dazu angeordnete weitere Förderstrecke 4 zu überstellen. Dies geschieht durch eine mehrere zueinander parallele Fördergurte 9 aufweisende Schrägförderstrecke 7.

Aus der US 3 470 998 A ist eine Vorrichtung an sich bekannt, mit der die Längsbewegung von Hölzern auf einem Lieferförderer 12 mit hoher Geschwindigkeit in eine Querbewegung auf einem quer dazu angeordneten, langsameren Abführförderer 14 geändert wird. Ein seitlich schwingender Bremsförderer 10 bringt die Hölzer von dem Lieferförderer 12 auf den Abführförderer 14.

Aus der DE-Auslegeschrift 1 296 576 ist es an sich bekannt, in Förderbandanlagen bei einer Abzweigung oder Eckumführung mit kleinen Umlenkradien zwischen dem ankommenden 1; 15 und dem abgehenden Förderband 11; 17 mechanische Verzögerungsglieder 6, 12 oder 16, 18 vorzusehen, die das Fördergut während der Umlenkung mit gegenüber der Geschwindigkeit der Förderbänder verminderter Geschwindigkeit mitnehmen.

Aus der DE 33 40 088 A1 ist eine Vorrichtung zum drucklosen Umformen eines breiten, mehrspurigen Flaschenstroms 32 bis 35 zu einem einspurigen Flaschenstrom 23 an sich bekannt. Zuförderer 31 und Abförderer 24 verlaufen unter 90^{o} zueinander. Parallel zu dem und angrenzend an das Abförderband 23 sind mit abnehmender Geschwindigkeit angetriebene Transportbänder 12 bis 19 eines Zwischenförderers 11 angeordnet. Der Zwischenförderer 11 ist zum Abförderer 24 hin nach unten geneigt, um eine Transportkomponente für die Flaschen quer zur Abförderrichtung zu erzielen.

Aus der DE 25 08 275 A1 ist es an sich bekannt, ein Umlenkende eines Abförderstrangs 2 zwischen einem Untergurt 1a und einem Obergurt 1b eines Zuförderers 1 anzuordnen.

Aus der DE 34 26 713 C2 ist eine Vorrichtung 16 zum Ausschleusen von auf einem geraden Förderband 10 transportierten Flaschen 12 an sich bekannt. Neben dem Förderband 10 ist ein umlaufend angetriebener Träger 20 mit einzeln zu aktivierenden Stößeln 33 angeordnet. Jeder Stößel 33 ist radial verschiebbar, wenn er mit einer stationären Kurvenführung 42 gekuppelt wird. Dadurch werden fehlerhafte Flaschen 12 auf ein zu dem Förderband 10 paralleles Nebenband geschoben.

Aus der DE 38 11 394 A1 ist eine Vorrichtung 20 an sich bekannt, mit der sich die Abstände D zwischen in einer Reihe bewegten Behältern 10 verändern lassen. Eine Nabe 22 ist drehend antreibbar und bildet eine Gleitführung für Speichen 24. Jede Speiche 24 trägt außen einen Mitnehmer 26, der durch eine Führung 28 so geführt ist, daß sich sein radialer Abstand von der Nabe 22 während deren Umlauf periodisch ändert.

Aus der DE 34 26 713 A1 ist es an sich bekannt, in einer Reinigungs- oder Abfüllanlage Flaschen 12 in einer Reihe auf einem Transportband 10 zu prüfen 14. Noch unsaubere oder nur teilweise gefüllte Flaschen 12 werden durch eine Ausschleusevorrichtung 16 von dem Transportband 10 auf ein parallel zu dem Transportband 10 und in gleicher Richtung und mit gleicher Geschwindigkeit wie das Transportband 10 laufendes Nebenband 46 geschoben. Die Ausschleusevorrichtung 16 weist neben dem Transportband 10 einen um eine senkrechte Achse 22 drehend antreibbaren, scheibenförmigen Träger 20 auf. In dem Träger 20 ist für jede Flasche 12 ein Stößel 33 in radialer Richtung verschiebbar geführt. In jedem Stößel 33 ist in senkrechter Richtung ein Mitnehmer 34 verschiebbar, so daß eine an dem Mitnehmer 34 drehbar gelagerte Rolle 36 in oder außer Berührung mit einer stationären Kurvenscheibe 42; 42' gelangt. Ein Elektromagnet 40 bringt nur die zu einer schlechten Flasche 12 gehörende Rolle 36 in Berührung mit der Kurvenscheibe 42; 42'.

Aus der DE 25 48 988 A1 ist es an sich bekannt, über einem Antransportband 13 und einem winklig dazu verlaufenden Abtransportband 15 einen Übergabeförderer 40 mit Transportfingern 45 für Behälter 12 anzuordnen, die aus einer Glasformmaschine 11 in einen Kühlofen 16 gelangen sollen. Zwischen den Transportbändern 13, 15 sind in dieser Reihenfolge ein dreieckiges Überleitblech 37, ein mit größerer Geschwindigkeit als der Übergabeförderer 40 laufendes Wägeband 28 und wiederum ein dreieckiges Überleitblech 37 angeordnet. Der Obertrum des Wägebandes 28 divergiert von den geradlinigen aktiven Trum 42 des Übergabeförderers 40 um einen Winkel Beta, um die Behälter 12 von dem aktiven Trum 42 zu lösen.

Der Erfindung liegt die Aufgabe zugrunde, die stoßartigen Belastungen der Behälter bei der Umlenkung zu verringern und die Anordnung der Behälter auf dem zweiten Transportband in möglichst gleichen Abständen voneinander und in einer möglichst gleichbleibenden, geraden Reihe zu verbessern.

Diese Aufgabe ist durch die Merkmale des Anspruchs 1 gelöst.

Das wenigstens eine Zwischenband erzeugt die gewünschte Antriebskomponente in Richtung des Antriebsorgans insbesondere durch Reibungsmitnahme der Behälter. Durch die Anordnung des wenigstens einen Zwischenbands wird der "Umlenkradius" in gewünschter Weise vergrößert. Dies führt zunächst zu einer schonenderen Umlenkung der Behälter mit deutlich verringerter Kipp- und Taumelneigung. Durch die Antriebskomponente in Richtung des Antriebsorgans werden ferner die Behälter in definierter, optimaler Position relativ zu der Umlenkvorrichtung gehalten. Insbesondere ist dadurch ausgeschlossen, daß sich Behälter während der Umlenkung in bisher gelegentlich zu beobachtender Weise aus aufeinanderfolgenden Transportfingern herausdrehen. Solche Behälter erreichen das zweite Transportband entweder überhaupt nicht oder treffen ungeordnet auf dem zweiten Transportband ein. Ein weiterer, durch den Gegenstand des Anspruchs 1 erreichter Vorteil ist der, daß entsprechend den modernen Hochgeschwindigkeits-Glasformmaschinen auch bei den höchsten Transportbandgeschwindigkeiten eine schonende und im Sinne der Anforderungen des Einschiebers einwandfreie Umlenkung der Behälter erfolgen kann.

Die Merkmale des Anspruchs 2 führen zu einer besonders schonenden Umlenkung der Behälter. Diese Maßnahme empfiehlt sich z.B. bei Behältern mit verhältnismäßig geringer Standsicherheit.

Durch die Merkmale des Anspruchs 3 kann der Antriebsaufwand verringert und die Synchronisation der Zwischenbänder mit den Transportbändern erleichtert werden.

Gemäß Anspruch 4 sind die unerwünschten Gleitplatten zwischen benachbarten Bändern völlig vermieden. Dies dient der Verbesserung des Laufes der Behälter.

Gleiches gilt für die Merkmale des Anspruchs 5.

Gemäß Anspruch 6 wird die Zuführung der Behälter zu den Transportfingern des Antriebsorgans verbessert. Diese Maßnahme wirkt sich günstig auf einen ungestörten Lauf der Behälter während der Umlenkung aus. Das erste Zentrierorgan kann z.B. als wärmeisolierte Kette oder Riemen ausgebildet sein.

Gemäß Anspruch 7 kann die Geschwindigkeit des ersten Zentrierorgans gegebenenfalls einstellbar sein. Der Antrieb kann von dem Antriebsorgan abgezweigt werden.

Auch die Merkmale des Anspruchs 8 dienen der Verbesserung der Umlenkung der Behälter.

Die Anordnung gemäß Anspruch 9 ist sowohl von der Unterbringung des wenigstens einen Zwischenbandes als auch für seinen Antrieb besonders günstig.

Die Merkmale des Anspruchs 10 bringen konstruktive, bauliche und betriebliche Vorteile.

Gemäß Anspruch 11 wird das Antriebsorgan in besonders günstiger Weise im Bereich der stetig gekrümmten Bahn gezogen und nicht mehr geschoben. Dadurch verbessert sich für das Antriebsorgan und seine Transportfinger der Lauf während des Umlenkens.

Die Merkmale des Anspruchs 12 begünstigen das Eintauchen der Transportfinger zwischen auf dem ersten Transportband aufeinanderfolgende Behälter.

Die Merkmale des Anspruchs 13 bringen den besonderen Vorteil, daß der die Umlenkung bewirkende Arbeitstrum des Antriebsorgans während der Änderung der Spannung des Antriebsorgans überhaupt nicht in seinen geometrischen Abmessungen, vor allem in seiner effektiven Länge, verändert wird.

Die Merkmale des Anspruchs 14 führen zu einem besonders günstigen Entfernen der Transportfinger aus dem Raum zwischen auf dem zweiten Transportband aufeinanderfolgenden Behältern. Der Durchmesser des hinteren Umlenkrades kann z.B. 5 bis 7fach größer als der Durchmesser des vorderen Umlenkrades sein.

Die Merkmale des Anspruchs 15 erleichtern ebenfalls die Entfernung der Transportfinger aus auf dem zweiten Transportband aufeinanderfolgenden Behältern. Außerdem ist es von Vorteil, wenn die Stützeinrichtung nur möglichst kurzzeitig in Berührung mit den dort noch verhältnismäßig heißen und nicht normalisierten Behälten tritt.

Die Merkmale des Anspruchs 16 gewährleisten bei Bedarf eine fluchtende Anordnung der Behälter in einer Reihe auf einer vorzugebenden Linie auf dem zweiten Transportband.

Gemäß Anspruch 17 kann der Antrieb des zweiten Zentrierorgans von dem hinteren Umlenkrad abgezweigt werden. Das Antriebsorgan läuft in diesem Fall unter einem bestimmten Winkel zur Bewegungsrichtung des zweiten Transportbandes ab. Aufgrund dieses Winkels ist bei Antrieb von derselben Welle die Geschwindigkeit des ablaufenden Abschnitts des Transportorgans geringer als die Geschwindigkeit des zweiten Transportbandes.

Gemäß Anspruch 18 läßt sich die Stützeinrichtung in besonders einfacher und wirksamer Weise verwirklichen. Bei dem Antriebsorgan handelt es sich z.B. um eine Rollenkette, deren Bolzen ein- oder beidseitig verlängert werden und zur Kupplung der Anlaufstücke dienen können. Die Anlaufstücke können mit einer die Behälter berührenden, wärmeisolierenden Schicht ausgestattet sein. Dadurch können thermisch negative Einflüsse auf die Behälter minimiert werden.

Auch die Anordnung gemäß Anspruch 19 bringt räumliche und antriebstechnische Vorteile.

Mit den Merkmalen des Anspruchs 20 lassen sich die Transportfinger besonders störungsfrei zwischen aufeinanderfolgende Behälter einführen und aus dem Raum aufeinanderfolgender Behälter wieder entfernen.

Die Merkmale gemäß Anspruch 21 sind konstruktiv einfach und funktionssicher.

Gemäß Anspruch 22 lassen sich die Ausfahr- und Einziehbewegungen der Transportfinger auf einfache Weise verwirklichen.

Die Merkmale des Anspruchs 23 kennzeichnen eine baulich besonders einfache Ausführungsform.

Gemäß Anspruch 24 läßt sich eine besonders schonende Umlenkung der Behälter bei Bedarf realisieren. Bei dem Bogenstück kann es sich z.B. um ein Ellipsenbogenstück handeln.

Das Antriebselement gemäß Anspruch 25 kann z.B. als Rollenkette ausgebildet sein.

Die Ausbildung gemäß Anspruch 26 ist baulich besonders einfach und insbesondere dann vertretbar, wenn durch das wenigstens eine Zwischenband eine Antriebskomponente auf die Behälter wirkt, die die Behälter von der Stützeinrichtung zu lösen trachtet oder tatsächlich löst.

Die Merkmale des Anspruchs 27 dienen im wesentlichen zur Sicherung dagegen, daß sich die Behälter in unerwünschter Weise nach innen hin bewegen. Vorzugsweise wird die Vortriebswirkung des wenigstens einen Zwischenbandes so dosiert, daß eine definierte, sehr leichte Anlage der Behälter außen an der Stützeinrichtung stattfindet, also ein geringer Abstand zur inneren Stützeinrichtung hin erhalten bleibt. Die Vortriebswirkung des wenigstens einen Zwischenbandes kann auch so dosiert werden, daß die Behälter schließlich weder die äußere noch die innere Stützeinrichtung berühren und dennoch in einer geraden Reihe mit gleichmäßigem Abstand voneinander auf das zweite Transportband abgegeben werden.

Die Ausbildung gemäß Anspruch 28 ist baulich besonders günstig.

Auch die Ausbildung gemäß Anspruch 29 ist verhältnismäßig einfach und dennoch funktionssicher.

Gemäß Anspruch 30 ergeben sich günstige konstruktive und bauliche Verhältnisse.

Gemäß Anspruch 31 können sich die Transportfinger z.B. mit einer um 2% geringeren Geschwindigkeit als die Bewegungsgeschwindigkeit des zweiten Transportbandes bewegen. Jeder Behälter läuft z.B. zunächst auf die Rückseite eines Transportfingers auf und wird dann nach dem Verlassen des ersten Transportbandes von der Vorderseite des nachfolgenden Transportfingers übernommen und weiter gefördert, bis bei Abgabe des Behälters an das zweite Transportband sich der Behälter von seinem Transportfinger löst.

Gemäß Anspruch 32 ergibt sich eine besonders gut definierte Führung des Antriebsorgans bzw. des Antriebselements. Wenn diese als Rollenketten ausgebildet sind, können die Rollenketten zumindest seitlich an ihren Rollen und ggf. zusätzlich unten an ihren Bolzen an der stationären Kurvenbahn abgestützt sein.

Weitere Merkmale und Vorteile der Erfindung werden nachfolgend anhand der in den Zeichnungen dargestellten Ausführungsbeispiele näher erläutert. Es zeigt:
Fig. 1 eine schematische Draufsicht auf eine erste Ausführungsform der Vorrichtung,
Fig. 2 einen Teil der Schnittansicht nach Linie II-II in Fig. 1,
Fig. 3 eine schematische Draufsicht auf eine zweite Ausführungsform der Vorrichtung,
Fig. 4A und 4B in senkrechter Aufeinanderfolge je einen Teil einer Ansicht von unten auf eine Vorrichtung nach dem Prinzip der Vorrichtung gemäß Fig. 3 mit Details und in vergrößerter Darstellung,
die Fig. 5A und 5B, die eine Fortsetzung voneinander in seitlicher Richtung darstellen, die Schnittansicht nach Linie V-V in den Fig. 4A und 4B in vergrößerter Darstellung,
Fig. 6 die Schnittansicht nach Linie VI-VI in Fig. 4B in vergrößerter Darstellung,
Fig. 7 die Schnittansicht nach Linie VII-VII in Fig. 4B in vergrößerter Darstellung,
Fig. 8 ein Detail aus Fig. 4 in vergrößerter Darstellung,
Fig. 9 die schematische Draufsicht auf eine weitere Ausführungsform der Vorrichtung,
Fig. 10 die schematische Draufsicht auf eine wiederum andere Ausführungsform der Vorrichtung,
Fig. 11A und 11B als seitliche Fortsetzung voneinander die Schnittansicht nach Linie XI-XI in Fig. 10 in vergrößerter Darstellung und
Fig. 12 die Schnittansicht nach Linie XII-XII in Fig. 11B.

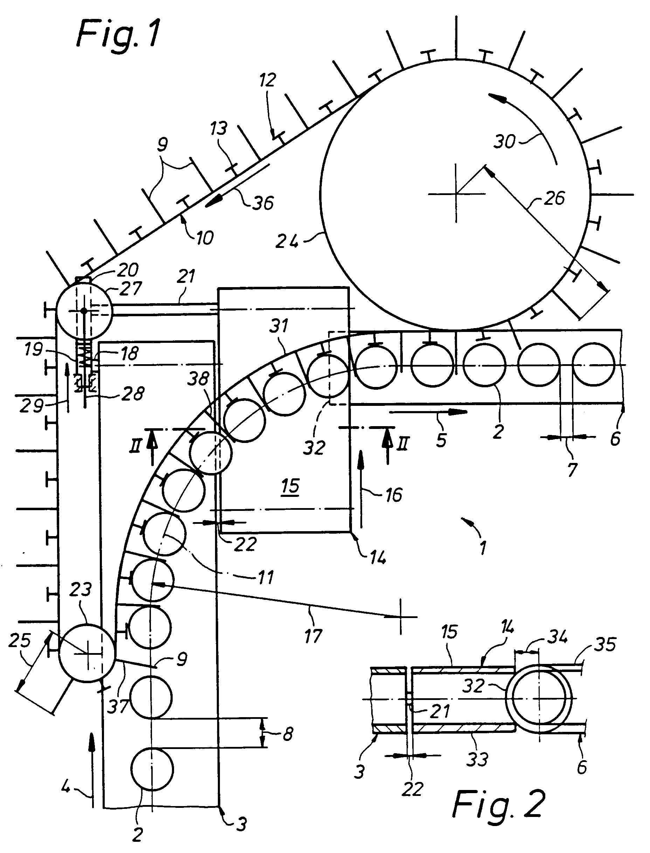

Fig. 1 zeigt eine Vorrichtung 1 zur Umlenkung von Behältern 2, die auf einem ersten Transportband 3 in einer ersten Bewegungsrichtung 4 in einer Reihe mit verhältnismäßig hoher erster Geschwindigkeit ankommen. In dem Ausführungsbeispiel bestehen die Behälter aus Glas und haben gerade eine nicht weiter dargestellte Glasformmaschine verlassen. Die Behälter 2 haben zu diesem Zeitpunkt noch eine verhältnismäßig hohe Temperatur.

Die Behälter 2 werden durch die Vorrichtung 1 auf ein mit geringerer zweiter Geschwindigkeit in einer zweiten Bewegungsrichtung 5 laufendes zweites Transportband 6 umgelenkt. Die Behälter 2 stehen auf dem zweiten Transportband in dem durch die Erfindung angestrebten Idealfall in einer geraden Linie und weisen gleich große zweite Abstände 7 voneinander auf, die aufgrund der Differenz der Bandgeschwindigkeiten kleiner sind als erste Abstände 8 der noch auf dem ersten Transportband 3 befindlichen Behälter 2 voneinander.

Bei der Umlenkung ist jedem Behälter 2 ein Transportfinger 9 zugeordnet. Alle Transportfinger 9 sind an einem gemeinsamen, die Transportfinger 9 bewegenden Antriebsorgan 10 angeordnet. Vorzugsweise ist das Antriebsorgan 10 als Rollenkette mit einseitig verlängerten Bolzen ausgebildet, wie dies später im einzelnen beschrieben werden wird.

Die Transportfinger 9 werden von dem ersten Transportband 3 bis auf das zweite Transportband 6 auf einer bezüglich der Behälter 2 konkaven, stetig gekrümmten Bahn 11 geführt. Damit sich auch die Längsachsen der Behälter 2 in der gewünschten Weise auf der stetig gekrümmten Bahn 11 bewegen, ist eine Stützeinrichtung 12 vorgesehen. Die Stützeinrichtung 12 weist bei dem Ausführungsbeispiel nach Fig. 1 zwischen aufeinanderfolgenden Transportfingern 9 ein an dem Antriebsorgan 10 befestigtes Anlaufstück 13 für die Behälter 2 auf. Zweckmäßigerweise sind die mit den Behältern 2 in Berührung tretenden Bereiche der Transportfinger 9 und der Anlaufstücke 13 aus einem gut wärmedämmenden, verschleißfesten, nicht metallischen Stoff hergestellt, um örtliche unerwünschte Abschreckung der Behälter 2 zu vermeiden. Die Behälter 2 werden in der Regel durch das zweite Transportband 6 einem Kühlofen zugeführt, in dem die Behälter 2 spannungsfrei temperiert werden. Dennoch sollte man das vorerwähnte örtliche Abschrecken der noch heißen Behälter 2 durch Elemente der Vorrichtung 1 vermeiden.

In der stetig gekrümmten Bahn 11 ist gemäß Fig. 1 zwischen dem ersten Transportband 3 und dem zweiten Transportband 6 ein jeden Behälter 2 übernehmendes Zwischenband 14 angeordnet. Das Zwischenband 14 verläuft parallel zu dem ersten Transportband 3. Ein Obertrum 15 des Zwischenbandes 14 wird mit einer dritten Geschwindigkeit in einer zu der ersten Bewegungsrichtung 4 parallelen dritten Bewegungsrichtung 16 angetrieben. Die dritte Geschwindigkeit des Zwischenbandes 14 ist geringer als die erste Geschwindigkeit des ersten Transportbandes 3 und braucht nur so groß zu sein, daß sich für die Behälter 2 auf dem Zwischenband 14 durch Reibungsmitnahme am Boden der Behälter 2 eine Antriebskomponente in Richtung des Antriebsorgans 10 ergibt, die gerade ausreicht, um die Behälter 2 in leichter Anlage an den Anlaufstücken 13 zu halten. Diese Antriebskomponente bewirkt insbesondere, daß die Behälter 2 sich während der Umlenkung nicht mehr unkontrolliert nach innen hin aus den benachbarten Transportfingern herausdrehen können.

In dem Fall der Fig. 1 stellt die stetig gekrümmte Bahn 11 ein Kreisbogenstück mit einem Radius 17 dar. Dank der Zwischenschaltung des Zwischenbandes 14 kann der Radius 17 deutlich größer als bei den bekannten Umlenkvorrichtungen sein. Schon dies führt zu einer schonenden Umlenkung und Richtungsänderung der Behälter 2 von dem ersten Transportband 3 auf das zweite Transportband 6, die in dem Fall der Fig. 1 90^{o} beträgt.

Auf einer Antriebswelle 18 des ersten Transportbandes 3 ist ein Zahnrad 19 befestigt, das mit einem größeren Zahnrad 20 kämmt, das auf einer Antriebswelle 21 des Zwischenbandes 14 befestigt ist. So kann der Antrieb des Zwischenbandes 14 von demjenigen des ersten Transportbandes 3 abgezweigt werden.

Ein Abstand 22 zwischen dem ersten Transportband 3 und dem Zwischenband 14 ist so gering bemessen, daß die Behälter 2 ohne Störung durch die Vorrichtung 1 von dem ersten Transportband 3 auf das Zwischenband 14 übergeschoben werden können.

An einem Annahmeende der stetig gekrümmten Bahn 11 befindet sich für das Antriebsorgan 10 ein vorderes Umlenkrad 23 von möglichst kleinem Durchmesser. Desgleichen ist an einem Abgabeende der stetig gekrümmten Bahn 11 ein hinteres Umlenkrad 24 für das Antriebsorgan 10 vorgesehen. In dem in Fig. 1 gezeigten Ausführungsbeispiel ist der Durchmesser des hinteren Umlenkrades 24 um ein Vielfaches größer als der Durchmesser des vorderen Umlenkrades 23. In Fig. 1 verdeutlicht diese Verhältnisse jeweils der eingezeichnete Mittenabstand 25 und 26 des freien Endes der Transportfinger 9 von der Mitte der Umlenkräder 23, 24. Auf der von den Behältern 2 abgewandten Seite des Antriebsorgans 10 ist ferner gemäß Fig. 1 ein Zwischenumlenkrad 27 angeordnet, das durch einen Kettenspanner 28 in Richtung des Pfeils 29 gegen das Antriebsorgan 10 vorgespannt ist. So läßt sich stets die optimale Spannung in dem Antriebsorgan 10 aufrechterhalten.

Von besonderem Vorteil ist, daß nicht das vordere Umlenkrad 23, sondern das hintere Umlenkrad 24 in Richtung des Pfeils 30 drehend antreibbar ist. Dadurch ergibt sich der besondere Vorteil, daß ein entlang der stetig gekrümmten Bahn 11 geführter Arbeitstrum 31 des Antriebsorgans nicht mehr geschoben, sondern gezogen wird. Dies führt zu einem gleichmäßigeren Lauf des Arbeitstrums 31 bei definiertem Abstand der Transportfinger 9 und der Anlaufstücke 13 voneinander.

Gemäß den Fig. 1 und 2 erstreckt sich ein Umlenkende 32 des zweiten Transportbandes 6 zwischen Obertrum 15 und Untertrum 33 des benachbarten, unter einem Winkel von 90^{o} dazu laufenden Zwischenbandes 14. Dadurch gelingt es, einen Abstand 34 zwischen dem Obertrum 15 und einem Obertrum 35 des zweiten Transportbandes 6 minimal zu gestalten.

Die Vorrichtung 1 gemäß Fig. 1 funktioniert wie folgt:
Das Antriebsorgan 10 wird in Richtung des Pfeils 36 mit einer Geschwindigkeit angetrieben, die etwas geringer als die zweite Geschwindigkeit des zweiten Transportbandes 6 ist. Dies hat zur Folge, daß jeder Behälter 2 auf dem ersten Transportband 3 zunächst auf die Rückseite 37 eines der Transportfinger 9 aufläuft und in Anlage an dieser Rückseite und dem zugehörigen Anlaufstück 13 verharrt, bis der Behälter 2 mehr oder weniger auf das Zwischenband 14 gelangt ist. Da sich das Zwischenband 14 mit geringerer Geschwindigkeit als das erste Transportband 3 bewegt, legt sich nach und nach jeder Behälter 2 an eine Vorderseite 38 des nachfolgenden Transportfingers 9 an, während die Anlage an dem zugehörigen Anlaufstück 13 erhalten bleibt. In dieser Zweipunktanlage verharrt jeder Behälter 2, bis er auf das zweite Trensportband 6 gelangt ist und durch dessen etwas größere Geschwindigkeit von der Vorderseite 38 des zugehörigen Transportfingers freikommt. Von diesem Augenblick an sollte der Behälter 2 nach Möglichkeit von keinem Transportfinger mehr berührt werden. Aufeinanderfolgende Behälter haben dann den gewünschten Abstand 7 voneinander.

Am Beginn der Umlenkung des Antriebsorgans 10 durch das hintere Umlenkrad 24 löst sich der Behälter 2 auch von seinem Anlaufstück 13. Dies hat zur Folge, daß alle Behälter 2 auf dem zweiten Transportband 6 in einer geraden Reihe stehen, wie dies beabsichtigt ist.

In allen Zeichnungsfiguren sind gleiche Teile mit gleichen Bezugszahlen versehen.

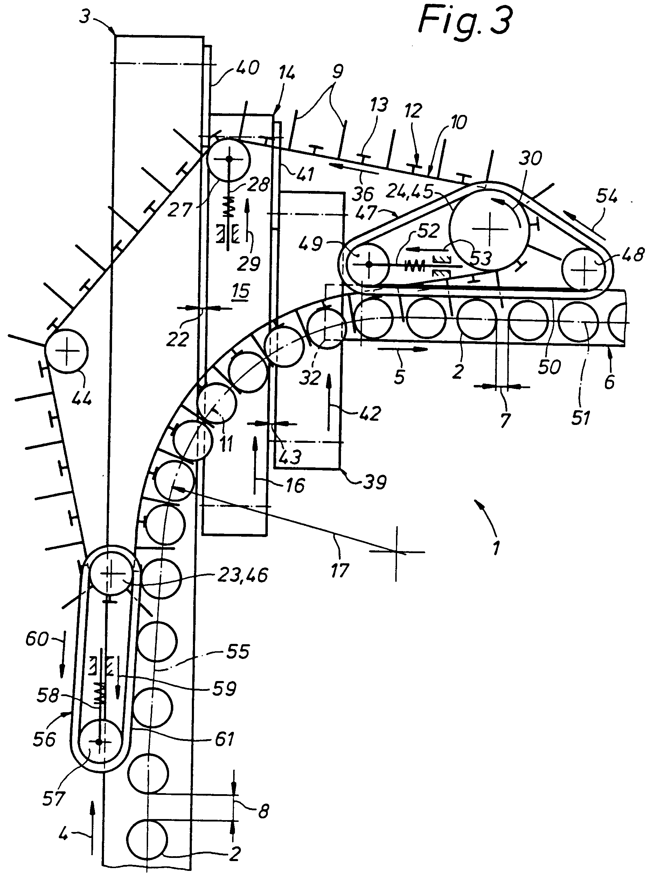

Bei dem Ausführungsbeispiel nach Fig. 3 ist parallel zu dem Zwischenband 14 noch ein weiteres Zwischenband 39 angeordnet.

Wie in Fig. 1 wird auch in Fig. 3 das Zwischenband 14 über ein Getriebe 40 mit geringerer Geschwindigkeit in der dritten Bewegungsrichtung 16 angetrieben als das erste Transportband 3. Über ein weiteres Getriebe 41 ist der Antrieb des weiteren Zwischenbandes 39 von dem Zwischenband 14 abgezweigt, und zwar derart, daß sich das weitere Zwischenband 39 in einer zu der dritten Bewegungsrichtung 16 parallelen vierten Bewegungsrichtung 42 langsamer bewegt als das Zwischenband 14. Ein Abstand 43 zwischen den Zwischenbändern 14, 39 kann beliebig klein gehalten werden, so daß er durch die Behälter 2 ohne Schwierigkeiten zu überwinden ist.

Außer dem Zwischenumlenkrad 27 ist in Fig. 3 noch ein weiteres Zwischenumlenkrad 44 vorgesehen. Das hintere Umlenkrad 24 liegt in Fig. 3 unterhalb eines damit fest verbundenen Umlenkrades 45. Das hintere Umlenkrad 24 besitzt einen deutlich kleineren Durchmesser als das hintere Umlenkrad 24 in Fig. 1. In ähnlicher Weise ist in Fig. 3 oberhalb des vorderen Umlenkrades 23 ein damit fest verbundenes Umlenkrad 46 angeordnet.

Am Beginn der Umlenkung des Antriebsorgans 10 durch das hinere Umlenkrad 24 befinden sich im Gegensatz zu Fig. 1 in Fig. 3 die Anlaufstücke 13 der Stützeinrichtung 12 schon in einem Abstand von den Behältern 2. Dies erleichtert das störungsfreie Herausbewegen der Transportfinger zwischen aufeinanderfolgenden Behältern 2. Um zu verhindern, daß dadurch aber die Behälter 2 nicht mehr in einer geraden vorzugebenden Linie 51 auf dem zweiten Transportband 6 stehen könnten, ist in diesem Bereich ein endloses, flexibles zweites Zentrierorgan 47 vorgesehen. Das zweite Zentrierorgan 47 kann z.B. als Rollenkette mit daran angebauten Anlaufstücken entsprechend der Gestaltung des Antriebsorgans 10 ausgebildet sein. Es kann aber auch ein Riemen bzw. ein Band Einsatz finden, das zumindest an seiner den Behältern 2 zugekehrten Seite aus einem wärmedämmenden, nichtmetallischen Stoff besteht. Das zweite Zentrierorgan 47 ist zunächst über das drehend angetriebene Umlenkrad 45 und außerdem über Umlenkräder 48 und 49 geführt. Ein Arbeitstrum 50 des zweiten Zentrierorgans 47 berührt die Behälter 2 und zentriert diese auf die gerade vorzugebende Linie 51 auf dem zweiten Transportband 6. Ein Kettenspanner 52 übt in Richtung des Pfeils 53 eine Spannkraft auf das Umlenkrad 49 und damit auf das zweite Zentrierorgan 47 aus. Das zweite Zentrierorgan 47 ist zumindest annähernd mit der Bewegungsgeschwindigkeit des zweiten Transportbandes 6 angetrieben, so daß die Behälter 2 durch den Arbeitstrum 50 nur gestützt, jedoch nicht mitgenommen werden, während das zweite Zentrierorgan 47 in Richtung des Pfeils 54 umläuft.

Zur Zentrierung der auf dem ersten Transportband 3 ankommenden Behälter 2 auf eine für die Übernahme der Behälter 2 durch die Transportfinger 9 vorzugebende Linie 55 ist gemäß Fig. 3 am vorderen Ende des Antriebsorgans 10 ein endloses, flexibles erstes Zentrierorgan 56 angeordnet. Das erste Zentrierorgan 56 ist einerseits über das drehend angetriebene Umlenkrad 46 und andererseits durch ein weiter vorne liegendes Umlenkrad 57 geführt. das Umlenkrad 57 ist durch einen Kettenspanner 58 derart beaufschlagt, daß sich eine Spannkraft in Richtung des Pfeils 59 auf das erste Zentrierorgan 56 ergibt. Das erste Zentrierorgan 56 kann wie das zweite Zentrierorgan 47 auf unterschiedliche Weise ausgebildet sein. Es läuft in Richtung des Pfeils 60 um und liegt mit einem Arbeitstrum 61 parallel zu der vorzugebenden Linie 55 an den Behältern 2 an. Die Behälter 2 werden auf diese Weise den Transportfingern 9 in lagerichtiger Weise zugeführt.

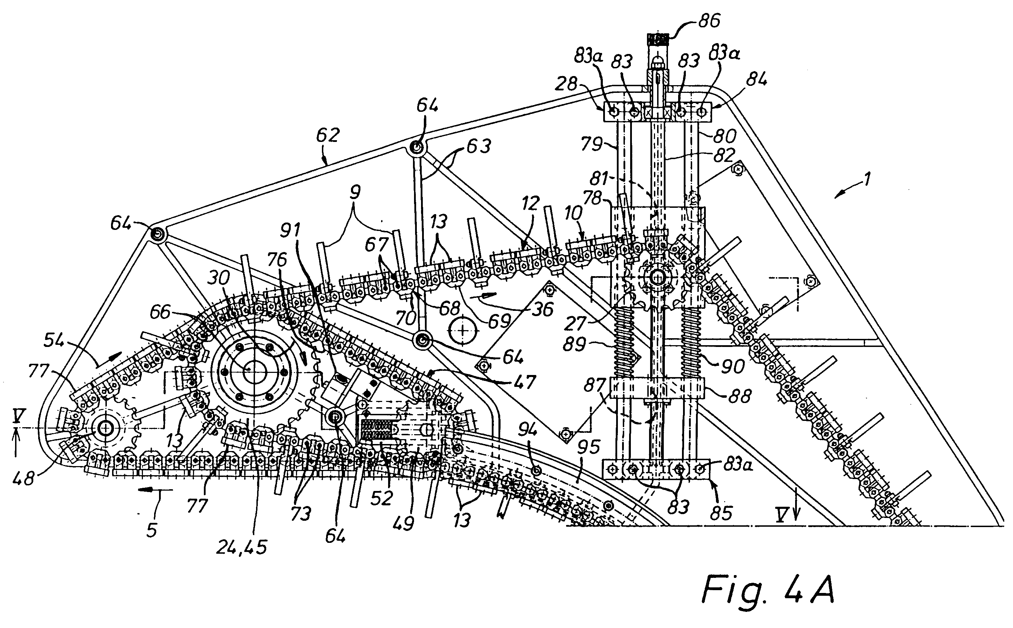

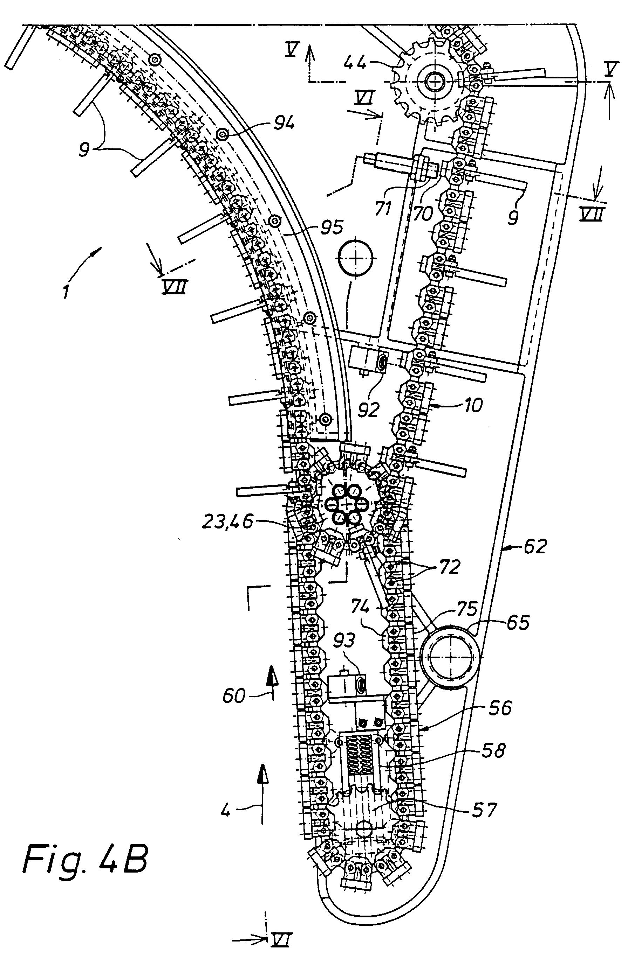

Die Fig. 4A und 4B zeigen eine Vorrichtung 1 nach dem Prinzip der Vorrichtung 1 gemäß Fig. 3 in Ansicht von unten. In den Fig. 4A und 4B sind jedoch zahlreiche Details dargestellt, die in Fig. 3 aus Gründen der Transparenz fortgelassen sind.

In den Fig. 4A und 4B ist die Vorrichtung 1 in ein stabiles Gehäuse 62 eingebettet, das mit kräftigen inneren Verstrebungen 63 versehen ist. An Knotenpunkten der Verstrebungen 63 sind in Fig. 4A Zentrier- und Gewindebohrungen 64 zu erkennen, in die nicht gezeichnete Schrauben eingedreht werden können, mit denen die Vorrichtung 1 an einer nicht gezeichneten, an sich bekannten Antriebs- und Verstelleinheit befestigt wird. Bis auf diese Befestigungspunkte ist die Vorrichtung 1 im übrigen freitragend ausgelegt. In besonderen Fällen kann jedoch eine weitere Abstützung der Vorrichtung 1 über ein in Fig. 4B dargestelltes Abstützauge 65 des Gehäuses 62 erfolgen.

In Fig. 4A ist konzentrisch zu den Umlenkrädern 24, 45 eine Antriebswelle 66 erkennbar, die mit der vorerwähnten Antriebs- und Verstelleinheit für den Drehantrieb der Umlenkräder 24, 45 kuppelbar ist.

In den Fig. 4A und 4B ist das Antriebsorgan 10 als Rollenkette ausgebildet, deren Bolzen 67 sämtlich nach oben hin verlängert sind. Auf jeweils zwei benachbarte Verlängerungen der Bolzen 67 sind entweder ein Halter 68 für einen der Transportfinger 9 oder ein Basisteil 69 eines der Anlaufstücke 13 aufgesetzt und in später zu beschreibender Weise in axialer Richtung gesichert. Die Halter 68 und die Basisteile 69 bestehen vorzugsweise aus Aluminium, um die Masse des Antriebsorgans 10 gering zu halten. Im Gegensatz zu den Basisteilen 69 weist jeder Halter 68 einen rückwärtigen Fortsatz 70 auf, der zur Betätigung eines Näherungsinitiators 71 (Fig. 4B) an dem Gehäuse 62 dient. Der Näherungsinitiator 71 ist in nicht gezeichneter Weise mit einer elektronischen Steuerung verbunden, an die unter anderem die Antriebe des ersten Transportbandes 3 und des zweiten Transportbandes 6 angeschlossen sind. Der Näherungsinitiator 71 gibt bei jedem Vorbeilauf eines der rückwärtigen Fortsätze 70 und damit eines Transportfingers 9 einen Impuls ab, so daß der Steuerung die augenblickliche Lage aller Transportfinger 9 relativ zu den Transportbändern 3, 6 bekannt ist.

Bei dem Ausführungsbeispiel nach Fig. 4A und 4B sind zwischen aufeinanderfolgenden Transportfingern 9 in Abweichung von Fig. 3 jeweils zwei Anlaufstücke 13 vorgesehen. Sollen Behälter 2 (Fig. 3) kleineren Durchmessers transportiert werden, kann man durch einfaches Umstecken der Transportfinger 9 und der Anlaufstücke 13 erreichen, daß zwischen aufeinanderfolgenden Transportfingern 9 sich nur ein Anlaufstück 13 befindet. Entsprechend lassen sich bei Behältern 2 größerer Durchmesser auch mehr als zwei Anlaufstücke 13 zwischen aufeinanderfolgenden Transportfingern 9 unterbringen. Auch die Transportfinger 9 lassen sich bei Bedarf durch einfaches, schnelles Umstecken gegen kürzere oder längere Transportfinger 9 austauschen.

Das erste Zentrierorgan 56 und das zweite Zentrierorgan 47 sind in den Fig. 4B und 4A ebenfalls als Rollenketten ausgebildet, deren Bolzen 72 und 73 jeweils nach oben hin verlängert sind. Auf jeweils zwei benachbarte Verlängerungen der Bolzen 72 ist gemäß Fig. 4B ein Basisteil 74 gesteckt und axial gesichert. Auf jedes Basisteil 74 ist außen ein Anlaufstück 75 aus gut wärmedämmendem, nichtmetallischen Material aufgeschraubt.

In der gleichen Weise ist auf jeweils zwei benachbarte Verlängerungen der Bolzen 73 gemäß Fig. 4A ein Basisteil 76 aufgesteckt, mit dem außen ein Anlaufstück 77 aus einem gut wärmedämmenden, nichtmetallischen Stoff angeschraubt ist.

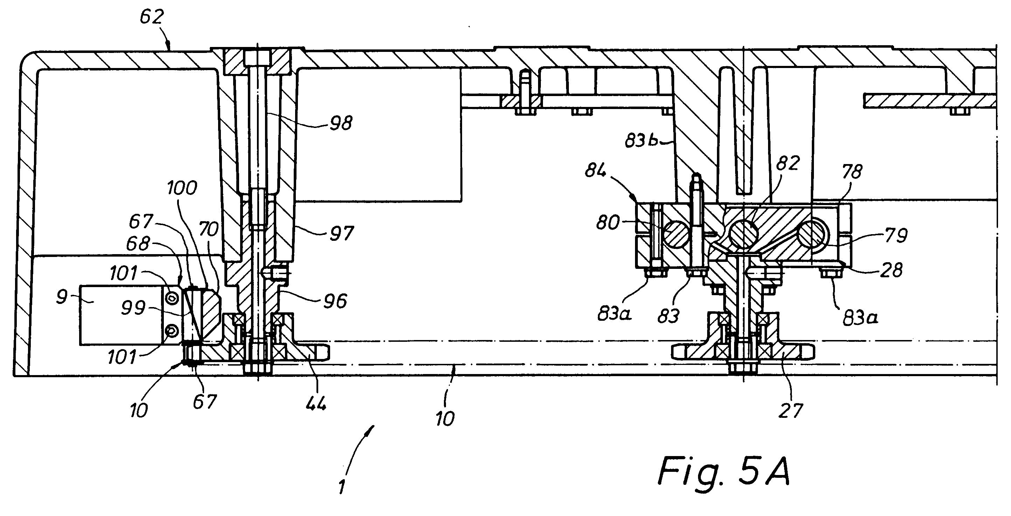

Gemäß Fig. 4A weist der Kettenspanner 28 einen Schlitten 78 auf, an dem das Zwischanumlenkrad 27 drehbar gelagert ist. Der Schlitten 78 ist frei verschiebbar auf Führungsstangen 79 und 80 geführt und weist ferner eine Durchgangsbohrung 81 auf, die eine mittige Schraubspindel 82 mit allseitigem Spiel aufnimmt. Die Führungsstangen 79, 80 sind über Klemmschrauben 83a an Böcken 84 und 85 des Gehäuses 62 festgelegt. Die Böcke 84, 85 sind über Befestigungsschrauben 83 an Pfeilern 83b (Fig. 5A) des Gehäuses 62 befestigt. Die Schraubspindel 82 ist in den Böcken 84, 85 drehbar gelagert und in dem Bock 84 in axialer Richtung fixiert. Die Schraubspindel 82 läßt sich über einen Drehknopf 86 von der Außenseite des Gehäuses 62 her drehen. Mit einem Außengewinde der Schraubspindel 82 steht ein Innengewinde 87 einer Traverse 88 im Eingriff, die auf den Führungsstangen 79, 80 frei verschiebbar ist. Zwischen dem Schlitten 78 und der Traverse 88 befinden sich auf den Führungsstangen 79, 80 Druckfedern 89 und 90, die den Schlitten 78 und damit das Zwischenumlenkrad 27 in Richtung auf das Antriebsorgan 10 vorspannen und damit ein verhältnismäßig häufiges Nachstellen des Drehknopfes 86 erübrigen.

In den Fig. 4A und 4B sind stationäre Sprühdüsen 91, 92 und 93 vorgesehen, die ein gesteuertes selbsttätiges Schmieren des zweiten Zentrierorgans 47, des Antriebsorgans 10 und des ersten Zentrierorgans 56 mit Schmiermittel ermöglichen.

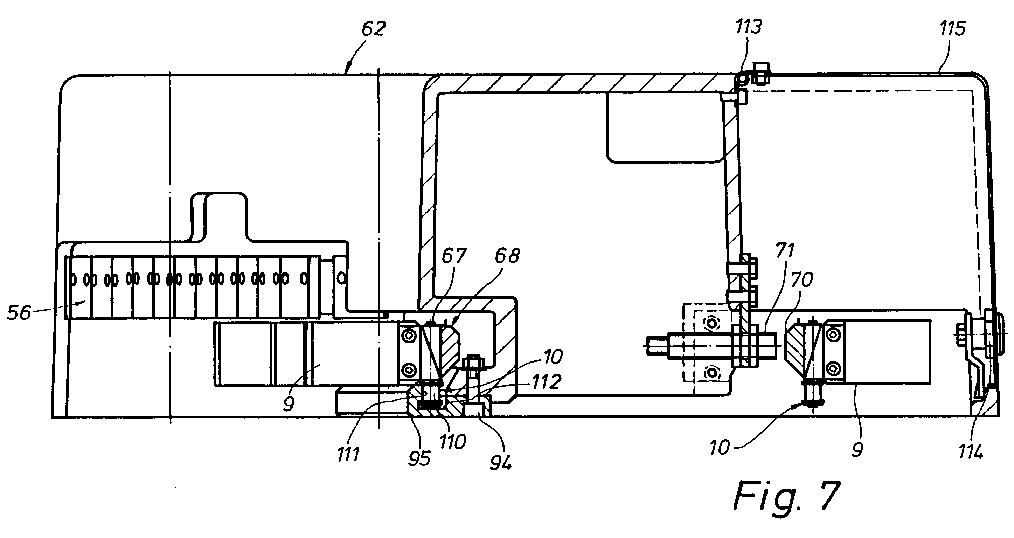

Aus den Fig. 4A und 4B ist ferner erkennbar, daß an die Unterseite des Gehäuses 62 mit Schrauben 94 eine stationäre Kurvenbahn 95 befestigt ist, mit der die Transportfinger 9 über das Antriebsorgan 10 auf der stetig gekrümmten Bahn 11 (Fig. 3) geführt werden. Einzelheiten dazu werden durch Fig. 7 erläutert werden.

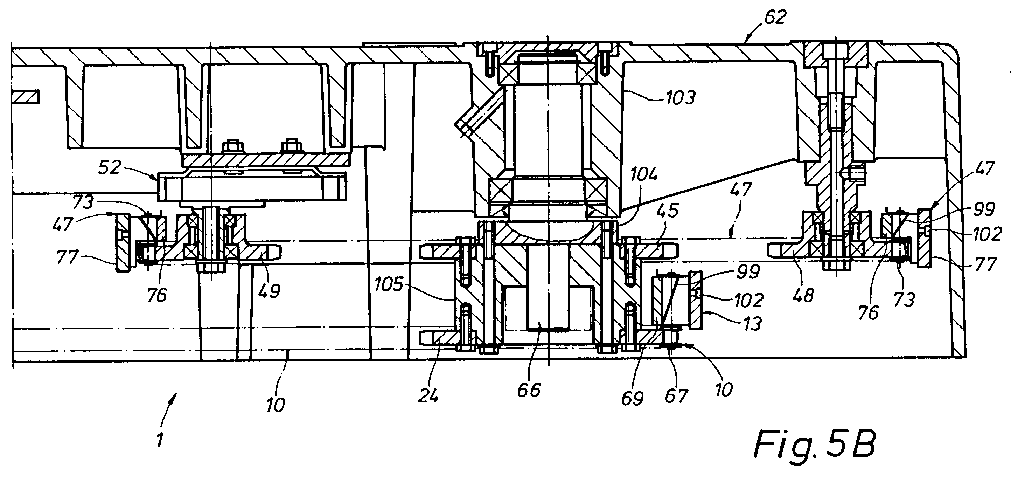

Die Fig. 5A und 5B zeigen weitere Einzelheiten. So ist in Fig. 5A das weitere Zwischenumlenkrad 44 an einer Steckachse 96 drehbar gelagert, die in einen Schaft 97 des Gehäuses 92 eingesteckt und dort mit einer Schraube 98 gesichert ist.

Die obere Verlängerung jedes Bolzens 67 ist in der Nähe ihres oberen Endes mit einer Umfangsnut versehen, in die in der Normallage der schmale Bereich einer schlüssellochartigen Durchbrechung in einer Z-förmigen Sicherungsfeder 99 eingreift. Damit ist der Halter 68 in axialer Richtung auf dem Bolzen 67 festgelegt. Zum Abheben des Halters 68 von dem Bolzen 67 muß lediglich ein hochstehendes Ende 100 der Sicherungsfeder 99 in Fig. 5A nach links geschoben werden, bis der weitere Teil der schlüssellochartigen Durchbrechung der Sicherungsfeder 99 ein Passieren des Bolzens 67 gestattet. Die Montage des Halters 68 kann in der umgekehrten Art ebenso schnell und leicht erfolgen. Der Transportfinger 9 ist an dem Halter 68 mit zwei Schrauben 101 lösbar befestigt.

Gleichartige Sicherungsfedern 99 dienen gemäß Fig. 5B auch zur axialen Festlegung der Basisteile 69 an den Bolzen 67 und der Basisteile 76 an den Bolzen 73.

Fig. 5B verdeutlicht, wie die Anlaufstücke 13, 77 jeweils mit Schrauben 102 an dem zugehörigen Basisteil 69, 76 lösbar befestigt sind.

Gemäß Fig. 5B ist die Antriebswelle 66 in einem Lagerstutzen 103 des Gehäuses 62 drehbar gelagert. Mit einem Flansch 104 der Antriebswelle 66 ist eine Nabe 105 verschraubt, an der die als gleiche Kettenradkränze ausgebildeten Umlenkräder 24, 45 beidseitig angeschraubt sind.

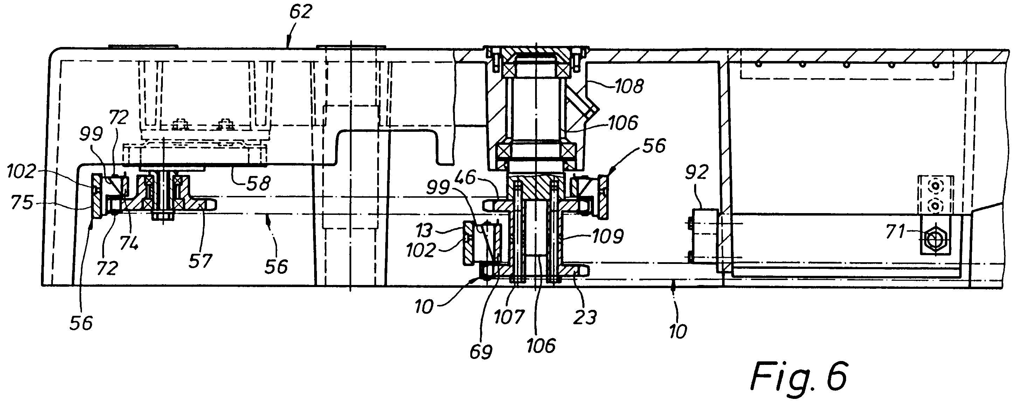

Gemäß Fig. 6 sind die als gleiche Kettenräder ausgebildeten Umlenkräder 23, 46 auf eine Welle 106 aufgesteckt und daran mit Schrauben 107 befestigt. Die Welle 106 ist in einem Lagerstutzen 108 des Gehäuses 62 frei drehbar gelagert. Zwischen die Umlenkräder 23, 46 ist ein Distanzring 109 eingelegt.

Aus Fig. 7 ist die stationäre Kurvenbahn 95 in ihrer Funktion erkennbar. Rollen 110 des als Rollenkette ausgebildeten Antriebsorgans 10 werden in waagerechter Richtung durch eine Kurvenfläche 111 der Kurvenbahn 95 gestützt und geführt. Zusätzlich können bei Bedarf die unteren Enden der Bolzen 67 auf einer waagerechten Kurvenfläche 112 der Kurvenbahn 95 gestützt und gleitend geführt werden. Dies ergibt insgesamt eine sehr genaue Führung des Antriebsorgans 10 entlang der stetig gekrümmten Bahn 11 (Fig. 3).

Über ein Scharnier 113 ist an dem Gehäuse 62 eine durch ein Schloß 114 verriegelbare Klappe 115 angelenkt, die von außen einen Zugriff zu dem Näherungsinitiator 71 gestattet.

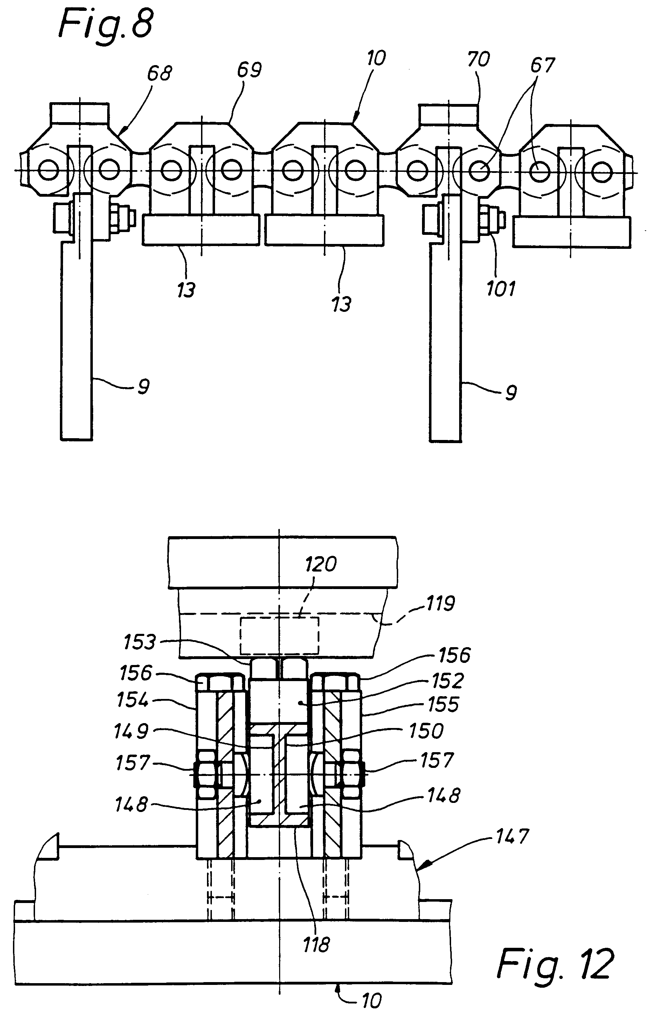

Fig. 8 verdeutlicht, daß sowohl die Halter 68 als auch die Basisteile 69 in der Draufsicht im wesentlichen U-förmig ausgebildet sind. Bei den Haltern 68 ist ein Schenkel des U-Profils zur Befestigung eines der Transportfinger 9 verlängert.

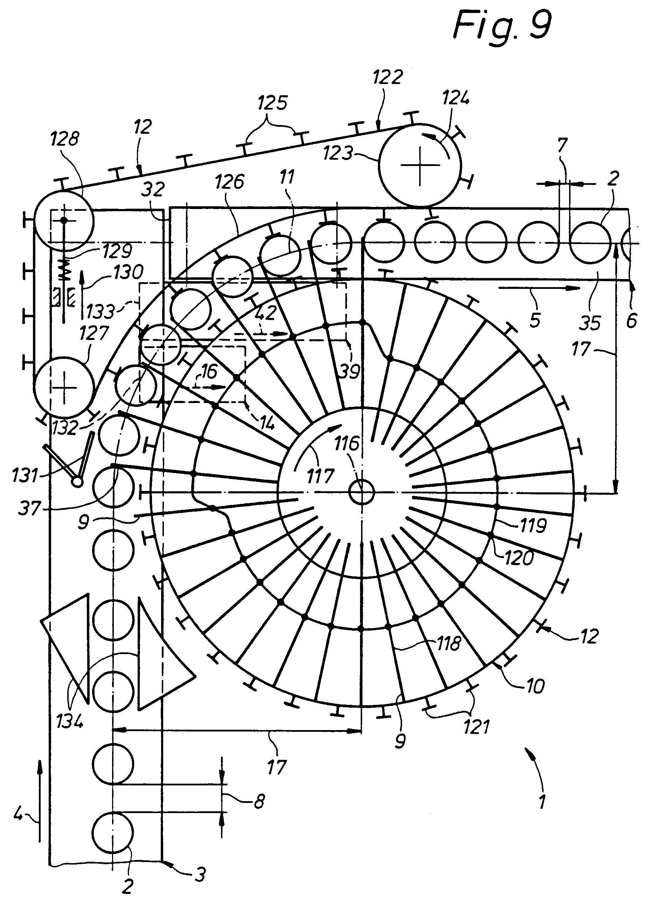

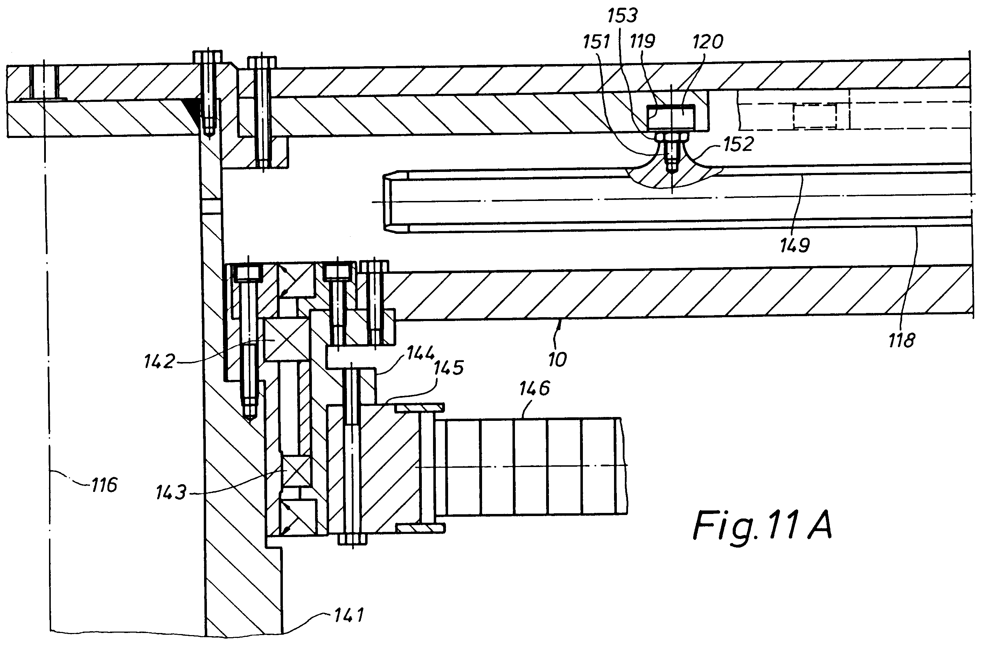

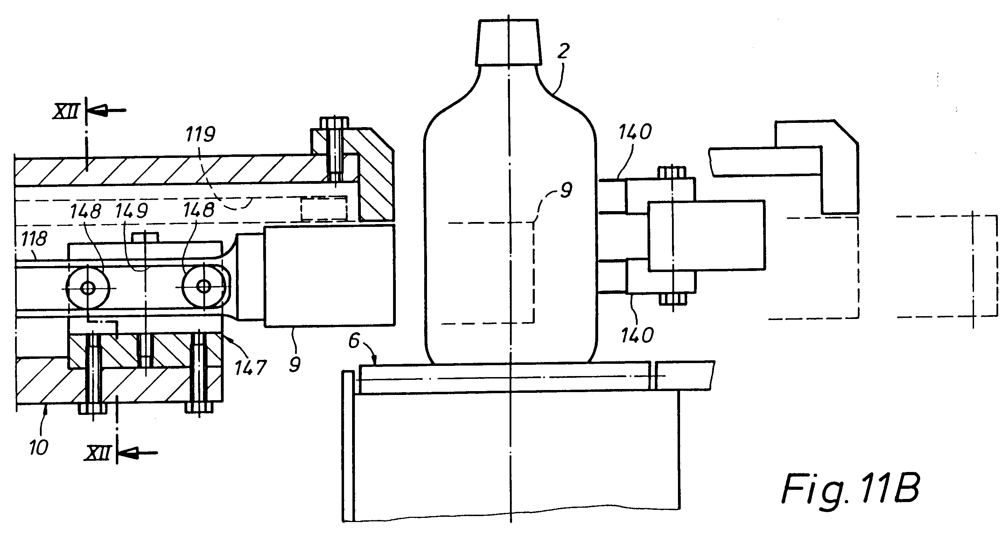

Bei der Ausführungsform nach Fig. 9 ist das Antriebsorgan 10 als um eine Achse 116 drehend antreibbarer Drehtisch ausgebildet. Das Antriebsorgan 10 wird normalerweise in Richtung des Pfeils 117 mit konstanter Winkelgeschwindigkeit angetrieben. Jeder Transportfinger 9 ist an einem an dem Antriebsorgan 10 in radialer Richtung verschiebbar gelagerten Halter 118 angeordnet, dessen Details aus den Fig. 11A, 11B und 12 ersichtlich sind.

Jeder Transportfinger 9 ist gemäß Fig. 9 am Anfang der stetig gekrümmten Bahn 11 nach außen in und am Ende der stetig gekrümmten Bahn 11 nach innen aus der Bewegungsbahn der Behälter 2 bewegbar. Diese Bewegungen werden durch eine stationäre Kurvenbahn 119 gesteuert, in die eine Kurvenrolle 120 jedes Halters 118 eingreift.

Die stetig gekrümmte Bahn 11 ist im Fall der Fig. 9 als Viertelkreis mit dem Radius 17 um die Achse 116 herum ausgebildet.

In Fig. 9 weist die Stützeinrichtung 12 auf der dem Antriebsorgan 10 zugewandten Seite der Behälter zwischen aufeinanderfolgenden Transportingern 9 jeweils ein Stützelement 121 auf. Es können auch mehrere solche Stützelemente 121 zwischen aufeinanderfolgenden Transportfingern 9 vorgesehen sein. Im ungestörten Normalbetrieb besteht vorzugsweise ein verhältnismäßig geringer radialer Abstand zwischen den Stützelementen 121 und den Behältern 2.

Die Stützeinrichtung 12 weist im Fall der Fig. 9 jedoch auch ein endloses, flexibles Antriebselement 122 auf. Das Antriebselement 122 ist vorzugsweise als Rollenkette ausgebildet und wird durch ein hinteres Umlenkrad 123 in Richtung des Pfeils 124 angetrieben. Das Antriebselement 122 kann insgesamt entsprechend den Zentrierorganen 47, 56 in Fig. 4A und 4B ausgebildet sein. Entsprechend ist das Antriebselement 122 mit Anlaufstücken 125 besetzt, deren wärmedämmende Außenflächen mit einer Geschwindigkeit bewegt werden, die zumindest annähernd der Bewegungsgeschwindigkeit der Behälter 2 auf dem zweiten Transportband entspricht. Ein Arbeitstrum 126 des Antriebselements 122 ist entsprechend der stetig gekrümmten Bahn 11 durch eine stationäre Kurvenbahn geführt, die der stationären Kurvenbahn 95 in Fig. 7 entsprechen kann. Das Antriebselement 122 läuft über ein vorderes Umlenkrad 127 und ein Zwischenumlenkrad 128, auf das ein Kettenspanner 129 in Richtung des Pfeils 130 eine Spannkraft ausübt.

Vor dem vorderen Umlenkrad 127 ist ein stationäres Leitblech 131 installiert, das die auf dem ersten Transportband 3 ankommenden Behälter 2 so einspeist, daß sie sich außer der Anlage an der Rückseite 37 eines der Transportfinger 9 auch geordnet an das zugehörige Anlaufstück 125 anlegen. In der Anlage an seinem Anlaufstück 125 verharrt jeder Behälter 2 bis zum Beginn der Umlenkung des Antriebselements 122 durch das hintere Umlenkrad 123.

Die beiden Zwischenbänder 14, 39 sind im Fall der Fig. 9 parallel zu dem zweiten Transportband 6 angeordnet und vermitteln den Behältern 2 eine nur verhältnismäßig geringe Antriebskomponente in der dritten und vierten Bewegungsrichtung 16, 42. Diese Antriebskomponente soll jeweils nur so groß sein, daß sie die Anlagekraft der Behälter 2 an den Anlaufstücken 125 auf einen beliebig kleinen Wert reduziert. Vorzugsweise soll die Antriebskomponente der Zwischenbänder 14, 39 jedoch nicht so klein sein, daß die Behälter von den Anlaufstücken 125 abgelöst oder gar an die Stützelemente 121 angelegt werden. Die Zwischenbänder 14, 39 fördern also auch hier eine schonende Umlenkung der Behälter 2 von dem ersten Transportband 3 auf das zweite Transportband 6. Umlenkenden 132 und 133 der Zwischenbänder 14, 39 sind analog Fig. 2 zwischen Obertrum und Untertrum des ersten Transportbandes 3 eingeführt, um nach Möglichkeit stationäre Zwischenplatten beim Übergang von dem ersten Transportband 3 auf die Zwischenbänder 14, 39 zu vermeiden.

Vor dem Leitblech 131 ist an dem ersten Transportband 3 ein Abweiser 134 derart angeordnet, daß auf dem ersten Transportband 3 nicht in ihrer Sollage ankommende Behälter 2 von dem ersten Transportband 3 entfernt werden. Dazu zählen insbesondere umgefallene oder extrem außermittig stehende Behälter 2.

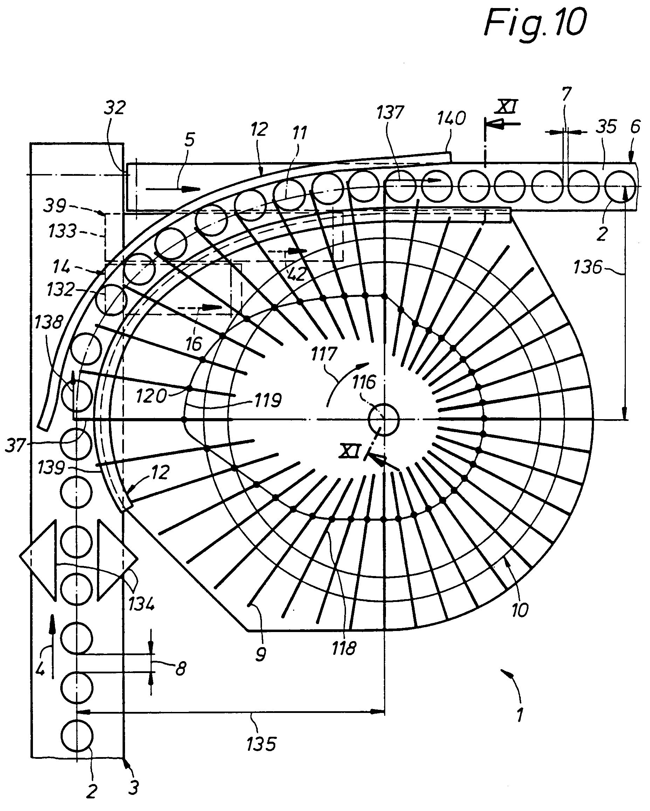

Die Fig. 10 zeigt eine weitere Ausführungsform der Vorrichtung 1, die im Prinzip ähnlich der Vorrichtung 1 gemäß Fig. 9 ausgebildet ist. Auch in Fig. 10 ist das Antriebsorgan 10 ein Drehtisch. Jedoch ist die stetig gekrümmte Bahn 11 im Fall der Fig. 10 ein Bogenstück von in der Transportrichtung stetig abnehmender Krümmung, in diesem Fall ein Ellipsenbogenstück.

Die lange Halbachse 135 und die kurze Halbachse 136 dieser Ellipse sind in Fig. 10 eingezeichnet. Diese von der Kreisbogenform abweichende Formgestaltung der stetig gekrümmten Bahn 11 hat zur Folge, daß die Transportfinger 9 beim Einziehen weiterhin eine Umfangsgeschwindigkeit 137 besitzen, die zumindest annähernd gleich der Transportgeschwindigkeit des zweiten Transportbandes 6 ist, daß aber die Umfangsgeschwindigkeit 138 der gerade nach außen zwischen aufeinanderfolgende Behälter 2 ausgefahrenen Transportfinger 9 größer als die Umfangsgeschwindigkeit 137 ist. Dies bringt den Vorteil, daß die auf dem ersten Transportband 3 ankommenden Behälter 2 - wenn überhaupt - nur mit verhältnismäßig geringer Differenzgeschwindigkeit auf die Rückseite 37 der Transportfinger 9 auflaufen, also dadurch weniger beeinträchtigt werden. Durch die von der Umfangsgeschwindigkeit 138 bis zur Umfangsgeschwindigkeit 137 stetig abnehmende Umfangsgeschwindigkeit der Transportfinger 9 wird ferner eine recht schonende Umlenkung der Behälter 2 erreicht. Dazu tragen wie in Fig. 9 die Zwischenbänder 14, 39 bei.

In Fig. 10 weist die Stützeinrichtung innerhalb der Behälter 2 ein Stützelement 139 auf, das als entsprechend der stetig gekrümmten Bahn 11 verlaufende stationäre Gleitschiene ausgebildet ist. Das Stützelement 139 entspricht in Funktion und relativer Anordnung zu den Behältern 2 den Stützelementen 121 in Fig. 9.

Die Stützeinrichtung 12 besitzt in Fig. 10 ferner auf der Außenseite der Behälter 2 eine entsprechend der stetig gekrümmten Bahn 11 verlaufende stationäre Gleitschiene 140. Durch die Gleitschiene 140 werden die Behälter schonend geführt und von der ersten Bewegungsrichtung 4 in die zweite Bewegungsrichtung 5 umgelenkt. Dank der Zwischenbänder 14, 39 kann die Anlagekraft der Behälter 2 an der stationären Gleitschiene 140 minimal gehalten werden. Bei Bedarf kann die stationäre Gleitschiene 140 auch durch ein flexibles endloses Antriebselement entsprechend dem Antriebselement 122 in Fig. 9 ersetzt werden.

Die Fig. 11A und 11B zeigen Details der Ausführungsform nach Fig. 10. Koaxial zu der Achse 116 ist ein stationäres Tragrohr 141 angeordnet. An dem Tragrohr 141 ist über Wälzlager 142 und 143 eine Nabe 144 drehbar gelagert, die über eine Riemenscheibe 145 durch einen Riemen 146 angetrieben wird. An der Nabe 144 ist das als Drehtisch ausgebildete Antriebsorgan 10 befestigt. Das Antriebsorgan 10 trägt außen gleichmäßig über den Umfang verteilt Führungsstücke 147. In jedem Führungsstück 147 ist einer der Halter 118 für die Transportfinger 9 radial verschiebbar geführt. Dazu weist jedes Führungsstück vier Führungsrollen 148 auf, die paarweise auf gegenüberliegenden Seiten des im Querschnitt I-förmig ausgebildeten Halters 118 in Längskanäle 149 und 150 (Fig. 12) eingreifen. Ein Gewindeschaft 151 der Kurvenrolle 120 ist in ein Auge 152 des Halters 118 eingeschraubt und dort mit einer Kontermutter 153 gesichert.

Gemäß Fig. 12 weist das Führungsstück 147 Seitenwangen 154 und 155 auf, die parallel zueinander und im Abstand der Breite des Halters 118 voneinander angeordnet und mit Schrauben 156 befestigt sind. An jeder Seitenwange 154, 155 sind die beiden zugehörigen Führungsrollen 148 mit Schrauben 157 festgelegt.

## Patentansprüche

1. Vorrichtung (1) zur Umlenkung von auf einem ersten Transportband (3) in einer Reihe mit verhältnismäßig hoher erster Geschwindigkeit ankommenden Behältern (2) aus Glas, glasähnlichen Stoffen oder Kunststoff auf ein mit geringerer zweiter Geschwindigkeit und unter einem Winkel zu dem ersten Transportband (3) laufendes zweites Transportband (6), auf dem die Behälter (2) in einer Reihe wegführbar sind,
wobei jedem Behälter (2) bei der Umlenkung ein Transportfinger (9) zugeordnet ist,
wobei alle Transportfinger (9) an einem gemeinsamen, die Transportfinger (9) bewegenden Antriebsorgan (10) angeordnet sind,
wobei die Transportfinger (9) bei der Umlenkung der Behälter (2) von dem ersten Transportband (3) bis auf das zweite Transportband (6) auf einer bezüglich der Behälter (2) konkaven, stetig gekrümmten Bahn (11) geführt sind,
und wobei eine Stützeinrichtung (12) für die Behälter (2) vorgesehen ist, um jeden Behälter (2) auf der stetig gekrümmten Bahn (11) zu halten,
dadurch gekennzeichnet, daß in der stetig gekrümmten Bahn (11) zwischen dem ersten (3) und dem zweiten Transportband (6) wenigstens ein jeden Behälter (2) auf einem Teil der stetig gekrümmten Bahn (11) über-nehmendes Zwischenband (14;39) angeordnet ist,
und daß ein Obertrum (15) jedes Zwischenbandes (14; 39) zumindest annähernd koplanar mit Obertrumen (35) des ersten (3) und zweiten Transportbandes (6) angeordnet und in einer solchen Richtung (16;42) antreibbar ist, daß sich für die Behälter (2) auf dem Zwischenband (14;39) eine Antriebskomponente in Richtung des Antriebsorgans (10) ergibt.

2. Vorrichtung nach Anspruch 1, dadurch gekennzeichnet, daß mehrere Zwischenbänder (14,39) vorgesehen und von dem ersten Transportband (3) zum zweiten Transportband (6) mit abnehmender Geschwindigkeit antreibbar sind.

3. Vorrichtung nach Anspruch 1 oder 2, dadurch gekennzeichnet, daß der Antrieb des wenigstens einen Zwischenbandes (14;39) von einem der Transportbänder (3;6) abgezweigt ist.

4. Vorrichtung nach einem der Ansprüche 1 bis 3, dadurch gekennzeichnet, daß zwischen benachbarten Bändern (3,14,39,6) jeweils ein durch die Behälter (2) selbst überbrückbarer Abstand (22,43) besteht.

5. Vorrichtung nach einem der Ansprüche 1 bis 4, dadurch gekennzeichnet, daß ein Umlenkende (32;132;133) eines Bandes (6;14;39) sich zwischen Ober- (15) und Untertrum (33) eines benachbarten, unter einem Winkel laufenden Bandes (14;3) erstreckt, um einen Abstand (34) zwischen den Obertrumen (14,35) dieser Bänder (3;6;14;39) minimal zu machen.

6. Vorrichtung nach einem der Ansprüche 1 bis 5, dadurch gekennzeichnet, daß zur Zentrierung der auf dem ersten Transportband (3) ankommenden Behälter (2) auf eine für die Übernahme der Behälter (2) durch die Transportfinger (9) erste vorzugebende Linie (55) am vorderen Ende des Antriebsorgans (10) ein endloses, flexibles erstes Zentrierorgan (56) angeordnet ist,
daß das erste Zentrierorgan (56) über Umlenkräder (46,57) mit zumindest annähernd senkrechten Achsen geführt und antreibbar ist,
und daß ein die Behälter (2) berührender Arbeitstrum (61) des ersten Zentrierorgans (56) parallel zu der ersten vorzugebenden Linie (55) und zumindest annähernd in der Bewegungsrichtung (4) eines Obertrums des ersten Transportbandes (3) läuft.

7. Vorrichtung nach Anspruch 6, dadurch gekennzeichnet, daß das erste Zentrierorgan (56) mit einer Geschwindigkeit von der Umlaufgeschwindigkeit des ersten Transportbandes (3) bis zu der Bewegungsgeschwindigkeit der Stützeinrichtung (10;12) antreibbar ist.

8. Vorrichtung nach einem der Ansprüche 1 bis 7, dadurch gekennzeichnet, daß an dem ersten Transportband (3) ein Abweiser (134) derart angeordnet ist, daß auf dem ersten Transportband (3) nicht in ihrer Sollage ankommende Behälter (2) von dem ersten Transportband (3) entfernt werden.

9. Vorrichtung nach einem der Ansprüche 1 bis 8, dadurch gekennzeichnet, daß das wenigstens eine Zwischenband (14;39) parallel zu dem ersten Transportband (3) verläuft.

10. Vorrichtung nach einem der Ansprüche 1 bis 9, dadurch gekennzeichnet, daß das Antriebsorgan (10) endlos und flexibel ausgebildet ist, und daß an einem Abgabeende der stetig gekrümmten Bahn (11) ein hinteres Umlenkrad (24) für das Antriebsorgan (10) angeordnet ist.

11. Vorrichtung nach Anspruch 10, dadurch gekennzeichnet, daß das hintere Umlenkrad (24) drehend antreibbar ist.

12. Vorrichtung nach Anspruch 10 oder 11, dadurch gekennzeichnet, daß an einem Annahmeende der stetig gekrümmten Bahn (11) ein vorderes Umlenkrad (23) von möglichst kleinem Durchmesser und auf der von den Behältern (2) abgewandten Seite des Antriebsorgans (10) wenigstens ein Zwischenumlenkrad (27;44) für das Antriebsorgan (10) angeordnet sind.

13. Vorrichtung nach Anspruch 12, dadurch gekennzeichnet, daß ein Zwischenumlenkrad (27) zur Änderung der Spannung des Antriebsorgans (10) einstellbar ist.

14. Vorrichtung nach Anspruch 12 oder 13, dadurch gekennzeichnet, daß der Durchmesser des hinteren Umlenkrades (24) um ein Vielfaches größer als der Durchmesser des vorderen Umlenkrades (23) ist, und daß am Beginn der Umlenkung des Antriebsorgans (10) durch das hintere Umlenkrad (24) die Stützeinrichtung (12,13) die Behälter (2) berührt.

15. Vorrichtung nach einem der Ansprüche 10 bis 13, dadurch gekennzeichnet, daß am Beginn der Umlenkung des Antriebsorgans (10) durch das hintere Umlenkrad (24) die Stützeinrichtung (12,13) in einem Abstand von den Behältern (2) angeordnet ist.

16. Vorrichtung nach Anspruch 15, dadurch gekennzeichnet, daß zur Zentrierung der Behälter (2) auf dem zweiten Transportband (6) auf eine zweite optimale Linie (51) am Annahmeende des zweiten Transportbandes (6) ein endloses, flexibles zweites Zentrierorgan (47) angeordnet ist,
daß das zweite Zentrierorgan (47) über Umlenkräder (45,48,49) mit zumindest annähernd senkrechten Achsen geführt und antreibbar ist,
und daß ein die Behälter (2) berührender Arbeitstrum (50) des zweiten Zentrierorgans (47) parallel zu der zweiten vorzugebenden Linie (51) und in der Bewegungsrichtung (5) der Behälter (2) auf dem zweiten Transportband (6) läuft.

17. Vorrichtung nach Anspruch 16, dadurch gekennzeichnet, daß das zweite Zentrierorgan (47) zumindest annähernd mit der Bewegungsgeschwindigkeit des zweiten Transportbandes (6) antreibbar ist.

18. Vorrichtung nach einem der Ansprüche 1 bis 17, dadurch gekennzeichnet, daß die Stützeinrichtung (12) zwischen aufeinanderfolgenden Transportfingern (9) wenigstens ein an dem Antriebsorgan (10) befestigtes Anlaufstück (13) für die Behälter (2) aufweist.

19. Vorrichtung nach einem der Ansprüche 1 bis 8, dadurch gekennzeichnet, daß das wenigstens eine Zwischenband (14;39) parallel zu dem zweiten Transportband (6) verläuft.

20. Vorrichtung nach einem der Ansprüche 1 bis 8 und 19, dadurch gekennzeichnet, daß das Antriebsorgan (10) als drehend antreibbarer Drehtisch ausgebildet ist,
daß jeder Transportfinger (9) am Anfang der stetig gekrümmten Bahn (11) nach außen in und am Ende der stetig gekrümmten Bahn (11) nach innen aus der Bewegungsbahn der Behälter (2) bewegbar an dem Drehtisch gehalten ist,
und daß die Stützeinrichtung (12) auf der von dem Drehtisch (10) abgewandten Seite der Behälter (2) zumindest entlang desjenigen Anfangsteils der stetig gekrümmten Bahn (11) angeordnet ist, auf dem die Behälter (2) noch in Berührung mit dem ersten Transportband (3) stehen.

21. Vorrichtung nach Anspruch 20, dadurch gekennzeichnet, daß jeder Transportfinger (9) an einem an dem Drehtisch (10) verschiebbar gelagerten Halter (118) angeordnet ist.

22. Vorrichtung nach Anspruch 21, dadurch gekennzeichnet, daß zur Verschiebung jeder Halter (118) eine Kurvenrolle (120) aufweist, die in einer stationären Kurvenbahn (119) abläuft.

23. Vorrichtung nach einem der Ansprüche 20 bis 22, dadurch gekennzeichnet, daß die stetig gekrümmte Bahn (11) ein Kreisbogenstück darstellt.

24. Vorrichtung nach einem der Ansprüche 20 bis 22, dadurch gekennzeichnet, daß die stetig gekrümmte Bahn (11) ein Bogenstück von in der Transportrichtung stetig abnehmender Krümmung darstellt.

25. Vorrichtung nach einem der Ansprüche 20 bis 24, dadurch gekennzeichnet, daß die Stützeinrichtung (12) ein endloses, flexibles Antriebselement (122) aufweist, und daß ein Arbeitstrum (126) des Antriebselements (122) entsprechend der stetig gekrümmten Bahn (11) geführt ist.

26. Vorrichtung nach einem der Ansprüche 20 bis 24, dadurch gekennzeichnet, daß die Stützeinrichtung (12) eine entsprechend der stetig gekrümmten Bahn (11) verlaufende stationäre Gleitschiene (139;140) aufweist.

27. Vorrichtung nach einem der Ansprüche 20 bis 26, dadurch gekennzeichnet, daß die Stützeinrichtung (12) auf der dem Drehtisch (10) zugewandten Seite der Behälter (2) wenigstens ein Stützelement (121) aufweist, und daß zwischen dem wenigstens einen Stützelement (121) und den Behältern (2) im ungestörten Normalbetrieb ein verhältnismäßig geringer Abstand besteht.

28. Vorrichtung nach Anspruch 27, dadurch gekennzeichnet, daß das Stützelement als stationäre Gleitschiene (139) ausgebildet ist.

29. Vorrichtung nach Anspruch 27, dadurch gekennzeichnet, daß die Stützelemente (121) jeweils zwischen aufeinanderfolgenden Transportfingern (9) wenigstens ein an dem Drehtisch (10) befestigtes Anlaufstück aufweisen.

30. Vorrichtung nach einem der Ansprüche 1 bis 29, dadurch gekennzeichnet, daß jeder Transportfinger (9) rechtwinklig zu der zugehörigen Außenkontur des Antriebsorgans (10) angeordnet ist.

31. Vorrichtung nach einem der Ansprüche 1 bis 30, dadurch gekennzeichnet, daß das Antriebsorgan (10) mit solcher Geschwindigkeit antreibbar ist, daß sich die Transportfinger (9) bei der Abgabe der Behälter (2) an das zweite Transportband (6) mit einer Geschwindigkeit bewegen, die gleich oder etwas kleiner als die Bewegungsgeschwindigkeit des zweiten Transportbandes (6) ist.

32. Vorrichtung nach einem der Ansprüche 1 bis 31, dadurch gekennzeichnet, daß ein Arbeitstrum (31) des Antriebsorgans (10) für die Transportfinger (9) oder ein Arbeitstrum (126) des Antriebselements (122) der Stützeinrichtung (12) im Bereich der stetig gekrümmten Bahn (11) durch eine stationäre Kurvenbahn (95) geführt ist.

## Claims

1. Apparatus (1) for the routing of containers (2) of glass, glass-like material or plastics material arriving on a first conveyor belt (3) in a row at a comparatively high, first speed to a second conveyor belt (6) running at a lower, second speed and at an angle to the first conveyor belt (3), on which second conveyor belt the containers (2) are to be carried away in a row,
wherein each container (2) is associated with a transportation finger (9) for the routing,
wherein all transportation fingers (9) are arranged on a common drive member (10) moving the transportation fingers (9),
wherein the transportation fingers (9), in the routing of the containers (2) from the first conveyor belt (3) as far as onto the second conveyor belt (6), are guided on a continuously curved path (11) which is concave with reference to the containers (2),
and wherein support means (12) is provided for the containers (2) in order to maintain each container (2) on the continuously curved path (11),
characterised in that at least one intermediate belt (14; 39) which takes control of each container (2) along a part of the continuously curved path (11) is arranged in the continuously curved path (11) between the first conveyor belt (3) and the second conveyor belt (6),
and in that an upper run (15) of each intermediate belt (14; 39) is arranged to be at least approximately co-planar with upper runs (35) of the first conveyor belt (3) and the second conveyor belt (6) and is drivable in such a direction (16; 42) that a driving component in the direction of the drive member (10) is imparted to the containers (2) on the intermediate belt (14; 39).

2. Apparatus according to claim 1, characterised in that a plurality of intermediate belts (14, 39) are provided and are drivable with decreasing speeds in the direction from the first conveyor belt (3) to the second conveyor belt (6).

3. Apparatus according to claim 1 or 2, characterised in that the drive for said at least one intermediate belt (14; 39) is derived from one of the conveyor belts (3; 6).

4. Apparatus according to one of claims 1 to 3, characterised in that a gap (22, 43) which is bridgeable by the containers (2) themselves is provided between adjacent belts (3, 14, 39, 6).

5. Apparatus according to one of claims 1 to 4, characterised in that a deflecting end (32; 132; 133) of a belt (6; 14; 39) extends between upper run (15) and lower run (33) of an adjacent belt (14; 3) running at an angle thereto, in order to minimise a gap (34) between the upper runs (14, 35) of these belts (3; 6; 14; 39).

6. Apparatus according to one of claims 1 to 5, characterised in that in order to centre the containers (2) arriving on the first conveyor belt (3) onto a first preselected line (55) for the receipt of the containers (2) by the transportation fingers (9), an endless flexible first centering member (56) is provided at the forward end of the drive member (10),
the first centering member (56) is guided and drivable by means of deflection wheels (46, 57) with at least approximately vertical axes,
and a working section (61) of the first centering member (56) contacting the containers (2) runs parallel to the first preselected line (55) and at least approximately in the direction of movement (4) of an upper run of the first conveyor belt (3).

7. Apparatus according to claim 6, characterised in that the first centering member (56) is drivable at a speed from the circulating speed of the first conveyor belt (3) up to the speed of movement of the support means (10; 12).

8. Apparatus according to one of claims 1 to 7, characterised in that on the first conveyor belt (3) is arranged a guard (134) such that containers (2) arriving on the first conveyor belt (3) which are not in their desired position are removed from the first conveyor belt (3).

9. Apparatus according to one of claims 1 to 8, characterised in that said at least one intermediate belt (14; 39) extends parallel to the first conveyor belt (3).

10. Apparatus according to one of claims 1 to 9, characterised in that the drive member (10) is endless and flexible, and a rearward deflection wheel (24) for the drive member (10) is arranged at a delivery end of the continuously curved path (11).

11. Apparatus according to claim 10, characterised in that the rearward deflection wheel (24) is rotationally drivable.

12. Apparatus according to claim 10 or 11, characterised in that at an input end of the continuously curved path (11) there is provided a forward deflection wheel (23) of smallest possible diameter, and at the side of the drive member (10) remote from the containers (2) there is provided at least one intermediate deflection wheel (27; 44) for the drive member (10).

13. Apparatus according to claim 12, characterised in that an intermediate deflection wheel (27) is adjustable for changing the tension of the drive member (10).

14. Apparatus according to claim 12 or 13, characterised in that the diameter of the rearward deflection wheel (24) is many times greater than the diameter of the forward deflection wheel (23), and the support means (12, 13) contacts the containers (2) at the beginning of the deflection of the drive member (10) by the rearward deflection wheel (24).

15. Apparatus according to one of claims 10 to 13, characterised in that the support means (12, 13) is arranged spaced from the containers (2) at the beginning of the deflection of the drive member (10) by the rearward deflection wheel (24).

16. Apparatus according to claim 15, characterised in that in order to centre the containers (2) on the second conveyor belt (6) on a second optimum line (51), an endless flexible second centering member (47) is arranged at the input end of the second conveyor belt (6),
the second centering member (47) is guided and is drivable by means of deflection wheels (45, 48, 49) which have at least approximately vertical axes,
and a working section (50) of the second centering member (47) contacting the containers (2) runs parallel to the second predetermined line (51) and in the direction of movement (5) of the containers (2) on the second conveyor belt (6).

17. Apparatus according to claim 16, characterised in that the second centering member (47) is drivable at least approximately at the speed of movement of the second conveyor belt (6).

18. Apparatus according to one of claims 1 to 17, characterised in that the support means (12) comprises at least one stopping member (13) for the containers (2) fixed to the drive member (10) and arranged between successive transportation fingers (9).

19. Apparatus according to one of claims 1 to 8, characterised in that the at least one intermediate belt (14; 39) extends parallel to the second conveyor belt (6).

20. Apparatus according to one of claims 1 to 8 and 19, characterised in that the drive member (10) is formed as a rotationally drivable rotary table,
each transportation finger (9) is held movably on the rotary table so as to move outwardly into the path of movement of the containers (2) at the beginning of the continuously curved path (11) and inwardly out of the path of movement of the containers (2) at the end of the continuously curved path (11),
and the support means (12) is arranged on the side of the containers (2) remote from the rotary table (10) at least along the initial part of the continuously curved path (11) when the containers (2) are still in contact with the first conveyor belt (3).

21. Apparatus according to claim 20, characterised in that each transportation finger (9) is arranged on a holder (118) which is displaceably mounted on the rotary table (10).

22. Apparatus according to claim 21, characterised in that for the displacement each holder (118) includes a curve roller (120) which travels in a stationary curved track (119).

23. Apparatus according to one of claims 20 to 22, characterised in that the continuously curved path (11) represents part of a circle.

24. Apparatus according to one of claims 20 to 22, characterised in that the continuously curved path (11) is represented by a member having curvature which decreases continuously in the direction of conveyance.

25. Apparatus according to one of claims 20 to 24, characterised in that the support means (12) comprises an endless flexible drive member (122), and a working section (126) of the drive member (122) is guided according to the continuously curved path (11).

26. Apparatus according to one of claims 20 to 24, characterised in that the support means (12) includes a stationary slide rail (139; 140) extending in accordance with the continuously curved path (11).

27. Apparatus according to one of claims 20 to 26, characterised in that the support means (12) includes at least one support member (121) on the side of the containers (2) facing the rotary table (10), and said at least one support member (121) and the containers (2) have a comparatively small spacing from each other in the undisturbed normal operation.

28. Apparatus according to claim 27, characterised in that said at least one support member is formed as a stationary slide rail (139).

29. Apparatus according to claim 27, characterised in that the support members (121) each include at least one stopping member fixed to the rotary table (10) between successive transportation fingers (9).

30. Apparatus according to one of claims 1 to 29, characterised in that each transportation finger (9) is arranged perpendicular to the associated external contour of the drive member (10).

31. Apparatus according to one of claims 1 to 30, characterised in that the drive member (10) is drivable at such a speed that the transportation fingers (9) at the delivery of the containers (2) to the second conveyor belt (6) move with a speed which is equal to or somewhat smaller than the speed of movement of the second conveyor belt (6).

32. Apparatus according to one of claims 1 to 31, characterised in that a working section (31) of the drive member (10) for the transportation fingers (9) or a working section (126) of the drive members (122) of the support means (12) is guided in the region of the continuously curved path (11) by a stationary curved track (95).

## Revendications

1. Dispositif (1) de déviation de récipients (20) en verre, en matières semblables au verre ou en plastique arrivant en une rangée sur une première courroie de transport (3) à une première vitesse relativement élevée, vers une deuxième courroie de transport (6) ayant une deuxième vitesse moins grande, formant un angle par rapport à la première courroie de transport (3), sur laquelle les récipients (2) peuvent être évacués en une rangée,
chaque récipient (2) étant associé lors de la déviation à une patte de transport (9),
toutes les pattes de transport (9) étant disposées sur un organe d'entraînement (10) commun qui déplace les pattes de transport (9),
les pattes de transport (9) étant guidées lors de la déviation des récipients (2) de la première courroie de transport (3) à la deuxième courroie de transport (6) sur une la piste (11) concave par rapport aux récipients (2) et de courbure constante,
et un dispositif d'appui (12) étant prévu pour les récipients (2) afin de maintenir chaque récipient (2) sur la piste (11) de courbure constante,
caractérisé en ce qu'au moins une courroie intermédiaire (14 ; 39) prenant en charge chaque récipient (2) sur une partie de la piste (11) de courbure constante est disposée dans la piste (11) de courbure constante entre la première courroie de transport (3) et la deuxième (6),
et en ce qu'un brin supérieur (15) de chaque courroie intermédiaire (14 ; 39) est disposé en position au moins approximativement coplanaire par rapport aux brins supérieurs (35) de la première et de la deuxième courroies de transport (3, 6) et peut être entraîné dans une direction (16 ; 42) telle qu'il en résulte pour les récipients (2) sur la courroie intermédiaire (14 ; 39) une composante d'entraînement dans le sens de l'organe d'entraînement (10).

2. Dispositif selon la revendication 1, caractérisé en ce que plusieurs courroies intermédiaires (14, 39) sont prévues et peuvent être entraînées à une vitesse décroissante de la première courroie de transport (3) à la deuxième courroie de transport (6).

3. Dispositif selon la revendication 1 ou 2, caractérisé en ce que l'entraînement de la courroie intermédiaire au nombre d'une au moins (14 ; 39) est dérivé de l'une des courroies de transport (3 ; 6).

4. Dispositif selon l'une ou l'ensemble des revendications 1 à 3, caractérisé en ce qu'il existe entre les courroies voisines (3, 14, 39, 6) un écart (22, 43) que les récipients (2) eux-mêmes peuvent franchir.

5. Dispositif selon l'une ou l'ensemble des revendications 1 à 4, caractérisé en ce qu'une extrémité de déviation (32 ; 132 ; 133) d'une courroie (6 ; 14 ; 39) s'étend entre un brin supérieur (15) et inférieur (33) d'une courroie (14 ; 3) voisine formant un angle, afin de réduire au minimum l'écart (34) entre les brins supérieurs (14, 35) de ces courroies (3 ; 6 ; 14 ; 39).

6. Dispositif selon l'une ou l'ensemble des revendications 1 à 5, caractérisé en ce qu'en vue du centrage des récipients (2) arrivant sur la première courroie de transport (3) sur une première ligne (55) à déterminer pour la reprise des récipients (2) par les pattes de transport (9), il est prévu à l'extrémité antérieure de l'organe d'entraînement (10) un premier organe de centrage (56) flexible sans fin,
en ce que le premier organe de centrage (56) est guidé et peut être entraîné sur des roues de déviation (46, 57) ayant des axes au moins approximativement verticaux,
et en ce qu'un brin actif (61) du premier organe de centrage (56) en contact avec les récipients (2) passe parallèlement à la première ligne (55) à déterminer et au moins approximativement dans le sens de déplacement (4) d'un brin supérieur de la première courroie de transport (3).

7. Dispositif selon la revendication 6, caractérisé en ce que le premier organe de centrage (56) peut être entraîné à une vitesse allant de la vitesse de circulation de la première courroie de transport (3) à la vitesse de déplacement du dispositif d'appui (10 ; 12).

8. Dispositif selon l'une ou l'ensemble des revendications 1 à 7, caractérisé en se qu'il est prévu sur la première courroie de transport (3) un déflecteur (134) disposé de telle sorte que les récipients (2) qui n'arrivent pas sur la première courroie de transport (3) dans leur position théorique soient enlevés de la première courroie de transport (3).

9. Dispositif selon l'une ou l'ensemble des revendications 1 à 8, caractérisé en ce que la courroie intermédiaire (14 ; 39) au nombre d'une au moins est parallèle à la première courroie de transport (3).

10. Dispositif selon l'une ou l'ensemble des revendications 1 à 9, caractérisé en ce que l'organe d'entraînement (10) est flexible et sans fin, et en ce qu'une roue de déviation postérieure (24)* est disposée à une extrémité de dépose de la piste (11) de courbure constante.

11. Dispositif selon la revendication 10, caractérisé en ce que la roue de déviation postérieure (24) peut être entraînée en rotation.

12. Dispositif de transport selon la revendication 10 ou 11, caractérisé en ce qu'il est prévu à une extrémité d'amenée de la piste (11) de courbure constante une roue de déviation antérieure (23) du plus petit diamètre possible et, sur le côté de l'organe d'entraînement (10) opposé aux récipients (2), au moins une roue de déviation intermédiaire (27 ; 44) pour l'organe d'entraînement (10).

13. Dispositif de transport selon la revendication 12, caractérisé en ce qu'une roue de déviation intermédiaire (27) peut être réglée en vue de modifier la tension de l'organe d'entraînement (10).

14. Dispositif de transport selon la revendication 12 ou 13, caractérisé en ce que le diamètre de roue de déviation postérieure (24) est un multiple du diamètre de roue de déviation antérieure (23), et en ce qu'au début de la déviation de l'organe d'entraînement (10) par la roue de *pour l'organe d'entraînement (10) déviation postérieure (24), le dispositif d'appui (12, 13) touche les récipients (2).

15. Dispositif selon l'une ou l'ensemble des revendications 10 à 13, caractérisé en ce qu'au début de la déviation de l'organe d'entraînement (10) par la roue de déviation postérieure (24), le dispositif d'appui (12, 13) est disposé à distance des récipients (2).

16. Dispositif de transport selon la revendication 15, caractérisé en ce qu'en vue du centrage des récipients (2) sur la deuxième courroie de transport (6) sur une deuxième ligne optimale (51), un deuxième organe de centrage (47) flexible sans fin est disposé à l'extrémité d'amenée de la deuxième courroie de transport (6),
en ce que le deuxième organe de centrage (47) peut être guidé et entraîné sur des roues de déviation (45, 48, 49) dont les axes sont au moins approximativement verticaux,
et en ce qu'un brin actif (50) du deuxième organe de centrage (47) touchant les récipients (2) passe parallèlement à la deuxième ligne (51) à déterminer et dans le sens de déplacement (5) des récipients (2) sur la deuxième courroie de transport (6).

17. Dispositif selon la revendication 16, caractérisé en ce que le deuxième organe de centrage (47) est susceptible d'être entraîné au moins approximativement par la vitesse de déplacement de la deuxième courroie de transport (6).

18. Dispositif selon l'une ou l'ensemble des revendications 1 à 17, caractérisé en ce que le dispositif d'appui (12) présente entre des pattes de transport (9) successives au moins une pièce de contact (13) fixée à l'organe d'entraînement (10).

19. Dispositif selon l'une quelconque des revendications 1 à 8, caractérisé en ce que la courroie intermédiaire (14 ; 39) au nombre d'une au moins est parallèle à la deuxième courroie de transport (6).

20. Dispositif selon l'une ou l'ensemble des revendications 1 à 8 et 19, caractérisé en ce que l'organe d'entraînement (10)est conçu comme une table tournante pouvant être entraînée en rotation,
en ce que chaque patte de transport (9) est maintenue sur la table tournante de façon à pouvoir se déplacer vers l'extérieur pour entrer dans la trajectoire de déplacement des récipients (2) au début de la piste (11) de courbure constante et vers l'intérieur pour en sortir à la fin de la piste (11) de courbure constante,
et en ce que le dispositif d'appui (12) est disposé sur le côté des récipients (2) opposé à la table tournante (10) au moins le long de la partie initiale de la piste (11) de courbure constante sur laquelle les récipients (2) sont encore en contact avec la première courroie de transport (3).

21. Dispositif selon la revendication 20, caractérisé en ce que chaque patte de transport (9) est disposée sur une fixation (118) supportée sur la table tournante (10) de façon coulissante.

22. Dispositif de transport selon la revendication 21, caractérisé en ce qu'en vue du déplacement de chaque fixation (118), il est prévu un rouleau de courbe (120) qui roule dans une piste incurvée (119) stationnaire.

23. Dispositif selon l'une ou l'ensemble des revendications 20 à 22, caractérisé en ce que la piste (11) de courbure constante représente un segment d'arc de cercle.

24. Dispositif selon l'une ou l'ensemble des revendications 20 à 22, caractérisé en ce que la piste (11) de courbure constante représente un segment d'arc dont la courbure diminue constamment dans le sens du transport.

25. Dispositif selon l'une ou l'ensemble des revendications 20 à 24, caractérisé en ce que le dispositif d'appui (12) présente un élément d'entraînement (122) flexible sans fin, et en ce qu'un brin actif (126) de l'élément d'entraînement (122) est guidé selon la piste (11) de courbure constante.

26. Dispositif selon l'une ou l'ensemble des revendications 20 à 24, caractérisé en ce que le dispositif d'appui (12) présente un rail de glissement (139 ; 140) stationnaire orienté selon la piste (11) de courbure constante.

27. Dispositif selon l'une ou l'ensemble des revendications 20 à 26, caractérisé en ce que le dispositif d'appui (12) présente sur le côté des récipients (2) orienté vers la table tournante (10) au moins un élément d'appui (121), et en ce qu'il existe entre l'élément d'appui (121) au nombre d'un au moins et les récipients (2), dans l'état de fonctionnement normal sans perturbations, un écart relativement réduit.

28. Dispositif de transport selon la revendication 27, caractérisé en ce que l'élément d'appui est conçu comme un rail de glissement (139) stationnaire.

29. Dispositif de transport selon la revendication 27, caractérisé en ce que les éléments d'appui (121) présentent chacun, entre des pattes de transport (9) successives, au moins une pièce de contact fixée à la table tournante (10).

30. Dispositif selon l'une ou l'ensemble des revendications 1 à 29, caractérisé en ce que chaque patte de transport(9) est disposée perpendiculairement au contour extérieur de l'organe d'entraînement (10).

31. Dispositif selon l'une ou l'ensemble des revendications 1 à 30, caractérisé en ce que l'organe d'entraînement (10) peut être entraîné à une vitesse telle que les pattes de transport (9) se déplacent lors de la dépose des récipients (2) sur la deuxième courroie de transport (6) à une vitesse égale ou légèrement inférieure à la vitesse de déplacement de la deuxième courroie de transport (6).

32. Dispositif selon l'une ou l'ensemble des revendications 1 à 31, caractérisé en ce qu'un brin actif (31) de l'organe d'entraînement (10) pour les pattes de transport (9) ou un brin actif (126) de l'élément d'entraînement (122) du dispositif d'appui (12) est guidé dans la zone de la piste (11) de courbure constante par une piste incurvée (95) stationnaire.
